(19) Europäisches Patentamt
European Patent Office
Office européen des brevets

(11) **EP 1 755 030 A2**

(12) **EUROPEAN PATENT APPLICATION**

(43) Date of publication:
**21.02.2007 Bulletin 2007/08**

(51) Int Cl.:
***G06F 3/12*** *(2006.01)*

(21) Application number: **06254043.0**

(22) Date of filing: **01.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.08.2005 JP 2005223717**
**02.08.2005 JP 2005223722**

(71) Applicant: **SEIKO EPSON CORPORATION**
**Shinjuku-ku,**
**Tokyo 163-0811 (JP)**

(72) Inventor: **Shima, Toshihiro,**
**c/o Seiko Epson Corporation**
**Shiojiri-shi**
**Nagano-ken 399-0785 (JP)**

(74) Representative: **Cloughley, Peter Andrew et al**
**Miller Sturt Kenyon,**
**9 John Street**
**London WC1N 2ES (GB)**

(54) **Control for execution of distributed printing**

(57) A printing controller is incorporated in at least one of a plurality of printing apparatuses connected to a network. the printing controller comprises a receiving module, a distribution destination specification module, a page assignment module, a sending module. The receiving module receives a first print job requesting a plurality of pages of printing. The distribution destination specification module specifies, from among the plurality of printing apparatuses, a plurality of destination printing apparatuses as distribution destinations for the plurality of pages of printing requested by the first print job. The page assignment module that assigns a page to each of the plurality of destination printing apparatuses by dividing the plurality of pages of printing requested by the first print job into a same number of groups as a number of the plurality of destination printing apparatuses. The sending module sends one of second print jobs respectively to each of the plurality of the destination printing apparatuses. Each of the second print jobs requests the assigned page of printing to each of the plurality of the destination printing apparatuses.

Fig.2

**Description**

The present invention relates to a technology for carrying out distributed printing wherein a print job is distributed to at least two printing apparatuses.

Description of the Related Art

In a distributed printing system, a printing controller that is connected via a network to a plurality of printing apparatuses distributes a print job to the plurality of printing apparatuses. In the conventional technology, a plurality of pages of printing requested by a single print job can be distributed as appropriate on a page basis to the plurality of printing apparatuses for printing in parallel to complete a plurality of pages of printing in a short period of time.

However, in the aforementioned conventional technology there are cases requiring a large system, including a dedicated server, for achieving distributed printing on a page basis.

Note that some printing apparatuses are provided with a printing mode wherein at least two pages are printed on a single sheet of printer paper. For example, there is a duplex-printing mode wherein pages are printed page-by-page on both sides of the printer paper.

However, in the aforementioned conventional technology, when the pages to be printed are distributed to the printing apparatuses as the distribution destinations, no thought has been given to the printing mode. Because of this, there is the risk that a plurality of pages to be printed onto a single sheet of printer paper will, as the result of performing distributed printing, be printed onto different sheets of printer paper. In such a case, the desired printing results may not be obtained in distributed printing.

An advantage of some aspects of the invention is to achieve distributed printing on a page basis using a simple structure. Another advantage of some aspects of the invention is to achieve desirable distributed printing a printing mode when performing distributed printing by the page unit using a printing mode that prints two or more pages onto a single print medium.

A first aspect of the invention provides a printing controller that is incorporated in at least one of a plurality of printing apparatuses connected to a network. The printing controller comprises a receiving module, a distribution destination specification module, a page assignment module, and a sending module. The receiving module receives a first print job requesting a plurality of pages of printing. The distribution destination specification module specifies, from among the plurality of printing apparatuses, a plurality of destination printing apparatuses as distribution destinations for the plurality of pages of printing requested by the first print job. The page assignment module assigns a page to each of the plurality of destination printing apparatuses by dividing the plurality of pages of printing requested by the first print job into a same number of groups as a number of the plurality of destination printing apparatuses. The sending module sends one of second print jobs respectively to each of the plurality of the destination printing apparatuses. Each of the second print jobs requests the assigned page of printing to each of the plurality of the destination printing apparatuses.

According to a first aspect of the invention, the printing controller incorporated in the printing apparatus performs distributed printing wherein the plurality of pages of printing are distributed to multiple destination printing apparatuses on a page basis. Because of this, distributed printing on a page basis can be achieved using a simple structure.

A second aspect of the invention provides a printing controller connected to a plurality of printing apparatuses, each of the plurality of printing apparatuses having a printing mode that prints at least two pages on a single print medium. The printing controller comprises a receiving module, a distribution destination specification module, a page assignment module, and a sending module. The receiving module receives a first print job requesting a plurality of pages of printing using the printing mode. The distribution destination specification module specifies, from among the plurality of printing apparatuses, a plurality of destination printing apparatuses as distribution destinations for the plurality of pages of printing requested by the first print job. The page assignment module assigns a page to each of the plurality of destination printing apparatuses by dividing the plurality of pages of printing requested by the first print job into a same number of page-groups as a number of the plurality of destination printing apparatuses. The page assignment module assigns certain pages to the same destination printing apparatus. The certain pages are printed on one print medium if the first print job is printed using a single printing apparatus. The sending module sends one of second print jobs respectively to each of the plurality of the destination printing apparatuses. Each of the second print jobs requests the assigned page of printing to each of the plurality of the destination printing apparatuses.

According to the printing controller pertaining to the second aspect of the invention, when the distributed printing wherein a plurality of pages of printing are distributed on a page basis to a plurality of destination printing apparatuses is performed in a printing mode that prints at least two pages on a single print medium, it is possible to reproduce the same printing results as when the plurality of pages of printing are performed on a single printing apparatus.

The present invention may be realized, besides the aspect of the printing controller described above, in an aspect of a printing apparatus connectable to a network, or in an aspect of a printing system including a plurality of printing apparatuses. Furthermore, the present invention is not limited to the aspect described above, and may be realized in the aspect of a method invention such as a printing method in a plurality of printing apparatuses connected to a network, or a printing method of distributing a print job to a plurality of printing apparatuses, each of the plurality of printing apparatuses having a printing mode that prints at least two pages on a single print medium. Moreover, the present invention may be realized in the aspect of various other aspects, such as a computer program used to construct these methods or apparatuses, a computer readable medium on which such computer program is recorded, and data signals in which such computer program is realized in a carrier wave

Embodiments of the present invention will now be described by way of further example only and with reference to the accompanying drawings, in which:

Fig. 1 is an explanatory diagram illustrating the schematic structure of a distributed printing system in a first embodiment;

Fig. 2 is a block diagram illustrating the internal structure of each device included in the distributed printing system according to the first embodiment;

Figs. 3A-B are schematic diagrams for describing the structure of a print job;

Fig. 4 is an explanatory diagram illustrating schematically a distributed printing process;

Fig. 5 is a flowchart of a processing routine in a distributed printing process;

Fig. 6 is a flowchart of a processing routine in a destination printer specification process;

Fig 7 is a table illustrating one example of the page count assigned to destination printers;

Fig. 8 is a flowchart of a processing routine for the reception process for a normal print job;

Fig. 9 is a flowchart of a processing routine for a printing process for a normal print job;

Fig. 10 is an explanatory diagram illustrating one example of a job control language for a print job requiring the duplex-printing mode;

Figs. 11A-B are schematic diagrams for describing the printed form in the duplex-printing mode;

Fig. 12 is a flowchart of a processing routine in a page assignment process in duplex-printing mode;

Figs. 13A-D are schematic diagrams for explaining the determination of the assigned pages in the duplex-printing mode;

Figs. 14A-D are schematic diagrams for explaining the results of determining the assigned pages in duplex-printing mode;

Fig. 15 is an explanatory diagram illustrating the data structure in a first print job JB 1 in a first variation;

Fig. 16 is a flowchart of a processing routine in a distributed printing process in the first variation; and

Figs. 17A-D are schematic diagrams for explaining the determination of the assigned pages in a second variation. Embodiments of the present invention will be described below with reference to the drawings.

A. First Embodiment:

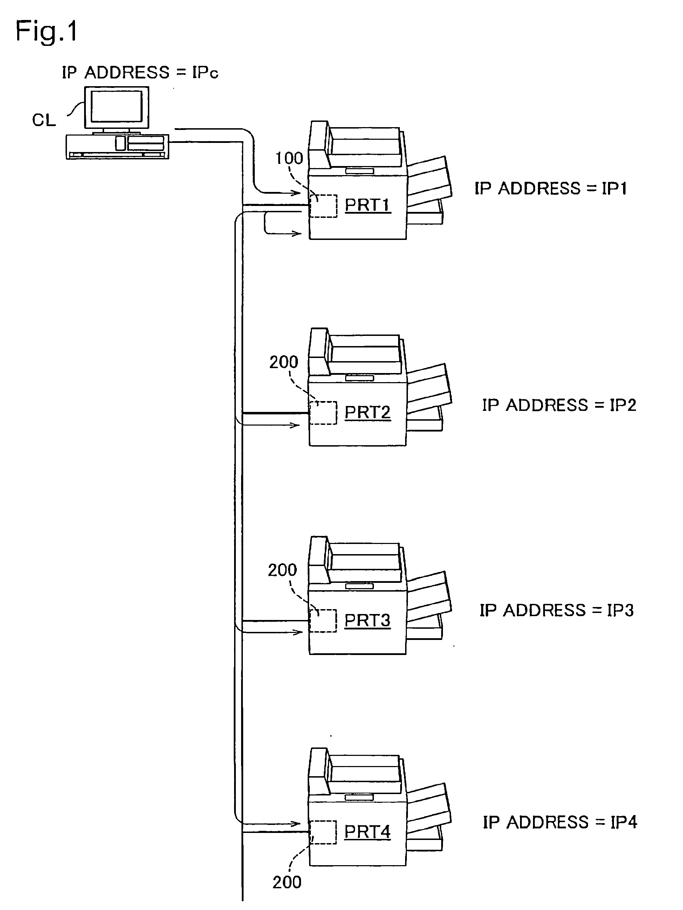

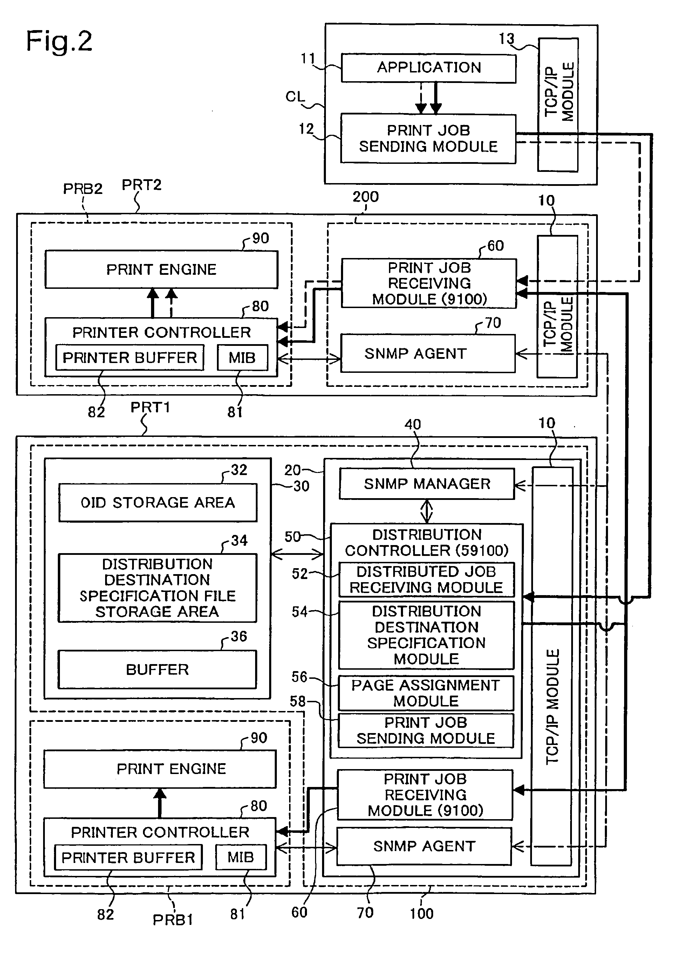

The structure of a distributed printing system in a first embodiment according to the present invention will be explained in reference to Fig. 1 and Fig. 2. Fig. 1 is an explanatory diagram illustrating the schematic structure of a distributed printing system in a first embodiment. Fig. 2 is a block diagram illustrating the internal structure of each device included in the distributed printing system according to the first embodiment.

The distributed printing system, as shown in Fig. 1, includes a computer as a client (herein after termed simple "the client") CL, and a plurality of printers PRT1 through PRT4. The client CL and the printers PRT1 through PRT4 are connected together through a local area network (LAN). The communications between each of the devices is performed through the use of the TCP/IP protocol, and thus IP addresses are assigned to each of the devices. For convenience in explanation, it will be assumed that the IP addresses that are set are "IPc" for the client CL, and "IP1" through "IP4" for the printers PRT1 through PRT4. Note that, strictly speaking, these IP addresses are not set for the client CL and the printers PRT1 through PRT4 themselves, but are set for the nodes when viewed from the TCP/IP network (for example, the network boards that are connected to the network for performing the TCP/IP communications).

A custom network board 100 is installed in the printer PRT1 among these printers. This custom network board 100 includes a distributed printing control function by which printing of a print job received from the client CL is distributed to printers PRT1-PRT4 for execution, and, in this embodiment, corresponds to the printing controller described in the Claims. A normal network board 200 is installed in the printers PRT2-PRT4.

In Fig. 1, the solid arrows indicate the sequence of operations wherein a print job is received by the custom network board 100 of the printer PRT1 from the client CL and that print job is distributed from the custom network board 100 of the printer PRT1 to the printers PRT1-PRT4. In this way, any of the printers PRT1-PRT4 can comprise a distribution destination for distributed printing from the custom network board 100 of the printer PRT1. In the discussion below, where there is no need to distinguish among the printers PRT1-PRT4, the number identifying the printer will be omitted and the symbol 'PRT' will simply be used. Furthermore, when a particular printer among the printers PRT1-PRT4 is deemed a distribution destination, it will be termed a destination printer.

The printer PRT1 includes a printer body PRB1 and the custom network board 100 described above, as shown in Fig. 2. The printer body PRB 1 includes mainly a print engine 90 and a print controller 80. The print engine 90 performs the actual printing. The print controller 80 receives a print job supplied from the print job receiving module 60 described below, interprets the print job and controls the print engine 90 to cause it to execute printing. The print controller 80 includes a print buffer 82 that temporarily stores data including supplied print jobs. The print controller 80 stores a file (hereinafter termed a 'MIB file') 81 in which various information pertaining to the printer body PRB 1 is collected and saved in a format called MIB (Management Information Base). Various types of information are stored in the MIB file 81 in units termed 'objects', and an object ID (hereinafter 'OID') is assigned to each object.

The custom network board 100 includes mainly a central processing unit (CPU) 20 and a memory 30. The custom network board 100 also includes a communication interface to enable actual network communication, but this communication interface is omitted from the drawing for the sake of convenience.

The CPU 20 reads out a program from software, etc., for executing the distributed printing, described above, and executes the program in order to achieve in software each of the functional modules that are shown. Note that each functional module may be structured in hardware instead.

The function modules realized via the CPU 20 include a TCP/IP module 10, a distribution controller 50, a print job receiving module 60, an SNMP manager 40 and an SNMP agent 70.

The TCP/IP module 10 interprets the TCP/IP protocol and executes external communication mainly over the network. Two protocols execute transport layer processing in the TCP/IP protocol: TCP (Transmission Control Protocol) and UDP (User Datagram Protocol). TCP is a protocol that implements communication where the connection is highly reliable. UDP, on the other hand, is a protocol that implements high-speed connection-less communication. The TCP/IP module 10 executes the communication of a print job described below using TCP, and also executes communication between the SNMP manager 40 and the SNMP agent 70 described below using UDP.

The distribution controller 50 receives a print job for which distributed printing is specified (hereinafter termed a "first print job"), and distributes the print job to the destination printers. The distribution controller 50 includes a distributed job receiving module 52, a distribution destination specification module 54, a page assignment module 56, and a print job sending module 58 as sub-functional modules. The distributed job receiving module 52 receives the first print job through the network from another device, such as the client CL. The distribution destination specification module 54 specifies a plurality of destination printers, from among the plurality of printers that are connected to the custom network board 100 via network, to be the distribution destinations for the first print job. The page assignment module 56 divides the plurality of pages of printing requested by the first print job into a same number of groups as a number of the plurality of destination printers that have been specified. The page assignment module 56 assigns a page included in one of the groups of pages respectively to each of the specified destination printers. The print job sending module 58 sends one of the print jobs (hereinafter referred to as "second print jobs") respectively to each of the destination printers. Each of the second jobs requests the assigned page of printing to each of the destination printers. The process performed by the distribution controller 50, such as described above, will be described in greater detail below.

The print job receiving module 60 receives normal print jobs that are not specified for distribution printing, such as the second print jobs described above, for example, and supplies them to the print controller 80. The SNMP manager 40 obtains various types of information based on inquiry made to the SNMP agent 70 included in each printer PRT1-PRT4 using a communication protocol called SNMP (Simple Network Management Protocol). The SNMP manager 40 performs this inquiry by identifying the information to be obtained by specifying the OID described above.

The SNMP agent 70 obtains the desired information from the above-described MIB file in response to the inquiry from the SNMP manager 40 and transmits this information to the SNMP manager 40.

Meanwhile, in addition to storing a program to implement these various functions, the memory 30 includes an OID storage area 32, a distribution destination specification file storage area 34, and a buffer 36. The OID storage area 32 stores the OID specified when the above inquiry is made by the SNMP manager 40. The OID is associated upon storage with the types of information about which an inquiry may be made, and the SNMP manager 40 can obtain the OID to be specified with reference to the OID storage area 32. The distribution destination specification file storage area 34 stores a distribution destination specification file. This distribution destination specification file is used where it is desired to specify beforehand those printers to be used during distributed printing as distribution destinations from among the multiple printers connected to the LAN. Therefore, where there is no need to specify printers in advance, the distribution destination specification file storage area 34 need not store any information. The buffer 36 is a storage area in which the CPU 20 temporarily stores data such as the received first print job.

The printers PRT2-PRT4 each have the identical construction, and therefore only the construction of the printer PRT2 will be discussed here. The printer PRT2 includes a printer body PRB2 and the normal network board 200 described above, as shown in Fig. 2. Because the construction of the printer body PRB2 is identical to that of the printer body PRB1 of the printer PRT1 described above, the same symbols assigned to the constituent elements of the printer body PRB1 of the printer PRT1 will be assigned here as well, and further description of the printer body PRB2 will be omitted. The normal network board 200 has the same functions as the custom network board 100 described above except for the distributed printing control function. In other words, the normal network board 200 has a TCP/IP module 10, a print job receiving module 60 and an SNMP agent 70. Because the various constituent elements of the normal network board 200 are identical to those of the corresponding elements of the custom network board 100, the same symbols will be assigned thereto and further description of the normal network board 200 will be omitted.

As can be understood from the above description, the custom network board 100 installed in the printer PRT1 includes all of the functions included in the normal network board 200 installed in the printers PRT2-PRT4. In addition, from the standpoint of the distribution controller 50 of the custom network board 100, the printers PRT1-PRT4 are all equal, and all can be specified as destination printers during the distributed printing process described below. The distribution controller 50 can also treat the very printer PRT1 in which the distribution controller 50 is installed as equal to the other printers without distinguishing therebetween.

The client CL includes in addition to an application 11, a TCP/IP module 13 and a print job transmission module 12 as function blocks, as shown in Fig. 2. The TCP/IP module 13 has the same functions and construction as the TCP/IP module 10 of the custom network board 100 described above. The print job transmission module 12 generates a print job in response to a print request from the application 11 and sends the generated print job to a printer PRT via the TCP/IP module 13. First print jobs for which distributed printing is specified are sent only to the printer PRT1 that includes the custom network board 100, while normal print jobs for which distributed printing is not specified may be sent to any of the printers PRT1-PRT4.

Print Jobs

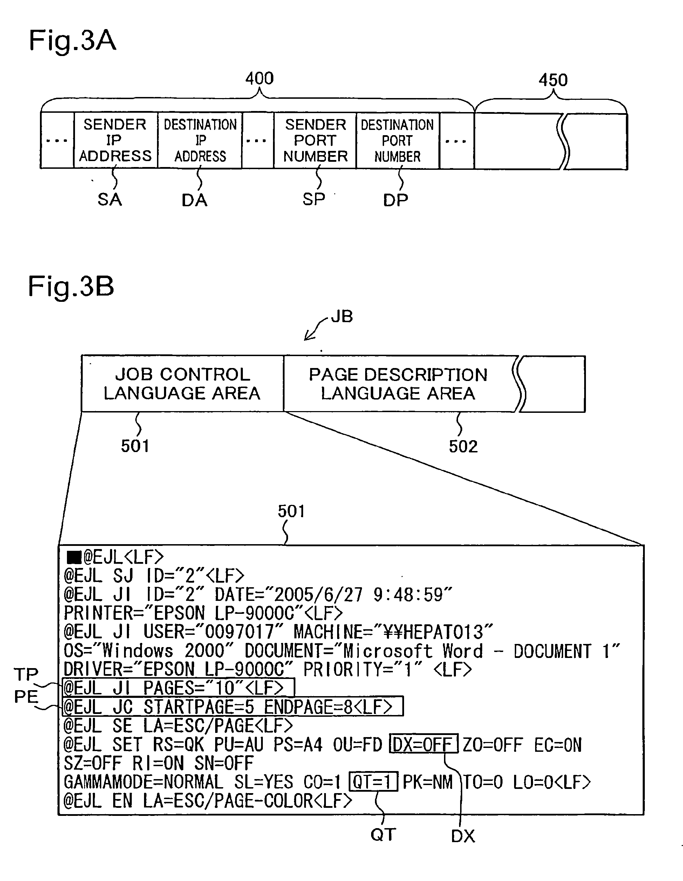

Before describing the distributed printing process, the print job used in this embodiment will be described with reference to Figs. 3A-B. Figs. 3A-B are schematic diagrams for describing the structure of a print job. Fig. 3A shows the structure of communication data used for the communication of a print job. Fig. 3B shows the data construction of a print job.

The print job is transmitted as communication data in a format based on the TCP/IP protocol. This communication data is divided into a header 400 and a data section 450, as shown in Fig. 3A. Of these, the header 400 includes a sender IP address SA that is the IP address of the device that is the sender of the communication data and a sender port number SP that is the port number that specifies the sender software in that device. The header 400 also includes a destination IP address DA that is the IP address of the device that is the destination of the communication data and a destination port number DP that is the port number that specifies the destination software in that device. The communication data transmitted from the sender device software is received by the device having the destination IP address and supplied to the software in the receiving device that is represented by the destination port number DP and that is on standby for such transmission. The data section 450 is a section in which the data comprising the object of transmission is stored, and in this embodiment, a print job is stored therein.

For example, where a first print job specified for distributed printing is transmitted by the client CL to the printer PRT1, the IP address 'IP1' that is the IP address of the printer PRT1 is written to the header 400 of the communication data as the destination IP address DA described above, while '59100' is written to the header 400 as the destination port number DP. '59100' is a port number of the distribution controller 50 that receives the first print job. In addition, 'IPc' and the port number of the print job transmission module 12 (the specific number is omitted) are written to the header 400 as the sender IP address SA and the sender port number SP, respectively. On the other hand, where a normal print job that is not specified for distributed printing is transmitted to the printer PRT1 by the client CL, '9100' is written to the header 400 as the destination port number DP instead of the above '59100'. '9100' is a port number of the print job receiving module 60 that receives normal print jobs. In other words, in this embodiment, the print job transmission module 12 selects whether or not to specify distributed printing by switching the value of the destination port number DP specified in the print job when the print job is transmitted. That is, a first print job for which distributed printing is specified refers to a print job received by the distribution controller 50 whose port number '59100', while a normal print job for which distributed printing is not specified refers to a print job received by the print job receiving module 60 whose port number '9100'. The contents of the print job itself basically do not change regardless of whether it is a first print job or a normal print job.

The data structure of a print job will now be described with reference to Fig. 3B. The print job JB has a job control language area 501 and a page description language area 502, as shown in Fig. 3B. The page description language area 502 is an area in which the print data that expresses the content to be printed is described in a prescribed page description language. ESC/Page or Postscript, for example, may be used as the page description language. The attributes necessary for printing of the print data described in the page description language area 502 are written to the job control language area 501. The job control language area 501 uses a prescribed job control language, consisting of EJL (Epson Job Language) in this embodiment.

The bottom part of Fig. 3B shows a specific example of the contents described in the job control language area 501. The job control language area 501 includes, as the aforementioned attributes, the size of the print paper, and the type of page description language used in notation in the page description language area 502, the total page count information TP, the printing mode specifying information DX, and the number of print copies QT. The total page count information TP indicates the total page count of the print data included in the page description language area 502. In the example illustrated in Fig. 3B, the total page count is notated as being 10 pages, as the total page count information TP. The printing mode specifying information DX indicates whether the printing mode is the duplex-printing mode or the single-side printing mode. Specifically, the description of "DX = OFF," as shown in Fig. 3 (b) indicates that the printing mode is the single-sided printing mode. On the other hand, the "DX = ON" description would indicate the duplex-printing mode.

The job control language area 501 can include page specification information PE. The page specification information PE is information that specifies the pages to be printed from among the total pages in the print data included in the page description language area 502. Where the job control language area 501 of the print job includes page specification information PE, the printer PRT selectively prints only the pages specified via the page specification information PE from within the print data included in the page description language area 502. The page specification information PE includes the start page number (S), and the end page number (E). In this way, either one page or multiple continuous pages are specified from the start page number (S) to the end page number (E). In the example of Fig. 3B, '5' is written as the start page number (STARTPAGE) and '8' is written as the end page number (ENDPAGE). Therefore, while the print job shown in Fig. 3B includes print data for the eight pages from page 1 to page 8, printing is requested for only four of these eight pages, i.e., the three pages from page 5 to page 8. On the other hand, a print job that does not include page specification information PE in the job control language area 501 is interpreted as requesting printing of all pages of the print data included in the page description language area 502.

Distributed Printing Process:

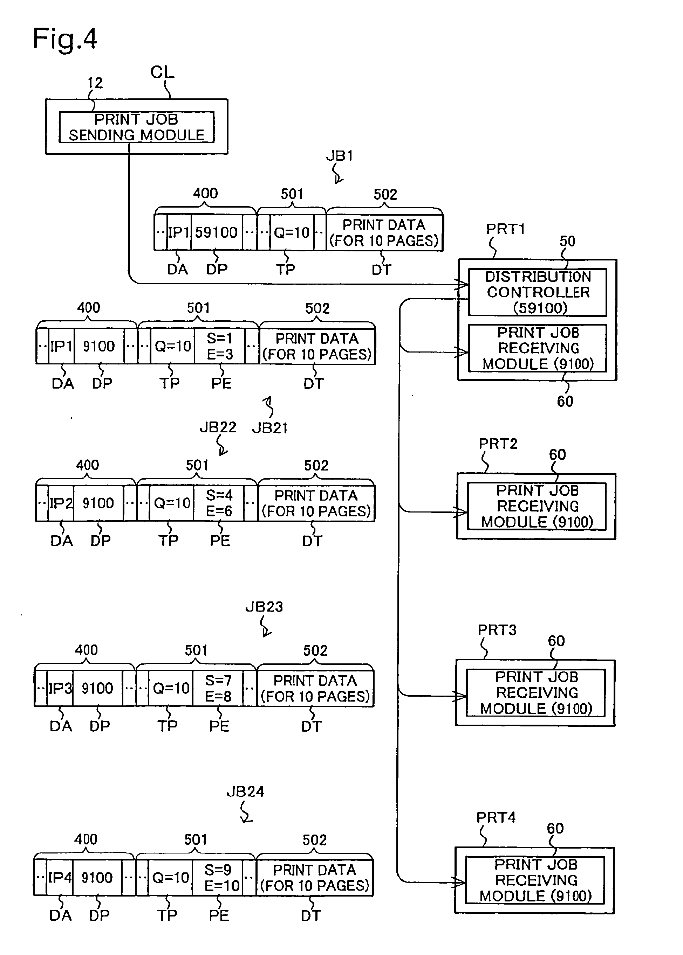

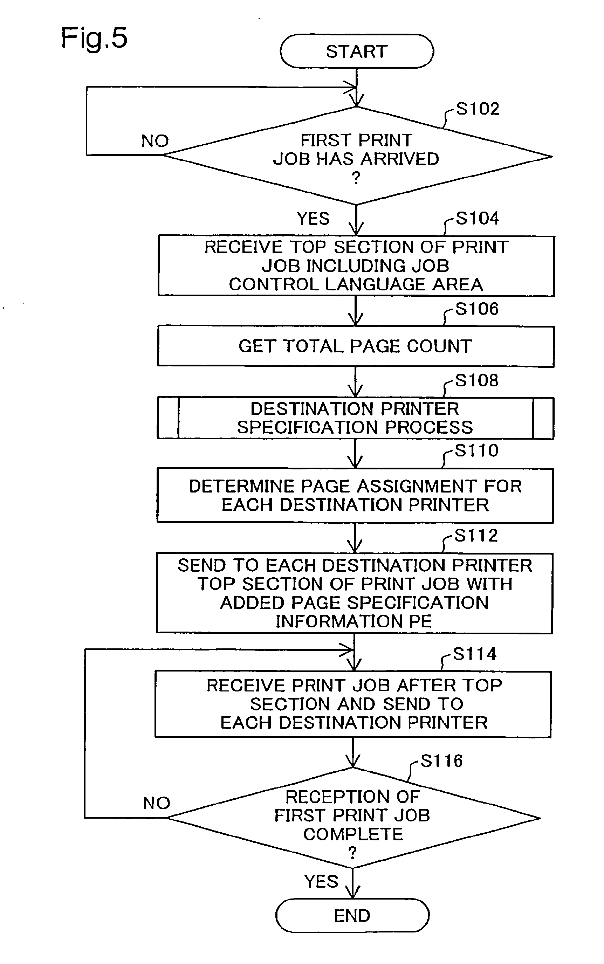

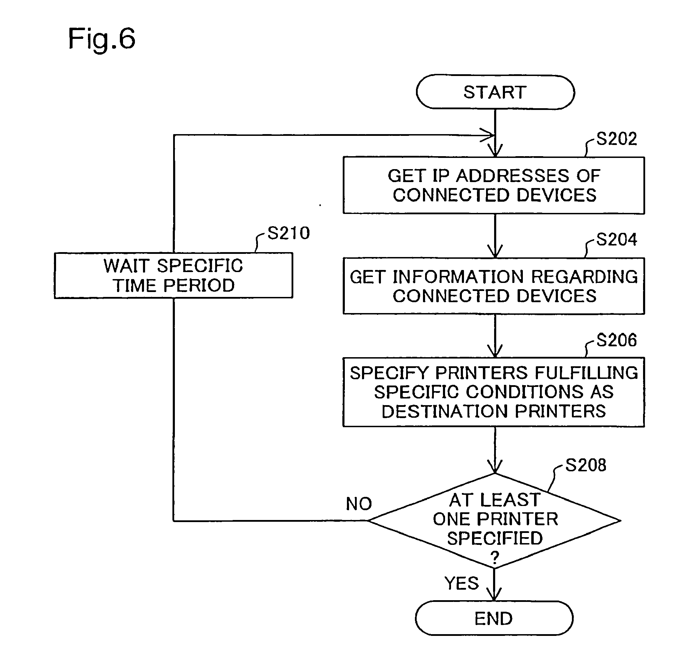

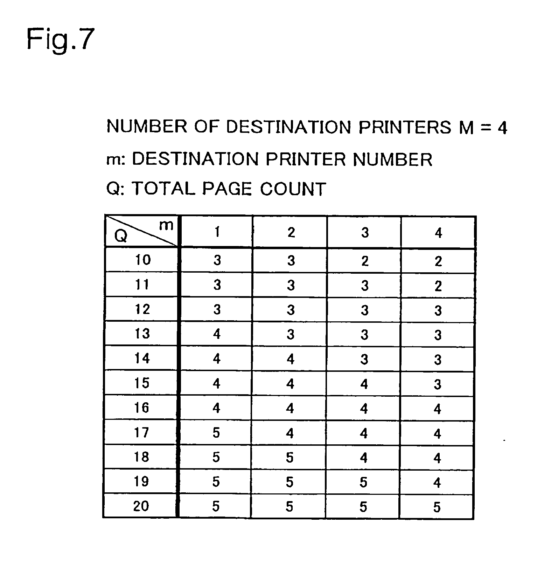

The distributed printing process in the present embodiment, performed using the print job described above, will be explained in detail referencing Fig. 4 through Fig. 7. Fig. 4 is an explanatory diagram illustrating schematically a distributed printing process. Fig. 5 is a flowchart of a processing routine in a distributed printing process. Fig. 6 is a flowchart of a processing routine in a destination printer specification process. Fig 7 is a table illustrating one example of the page count assigned to destination printers. In a first embodiment, first the distributed printing process will be explained for the case wherein "DX = OFF" is specified in the first print job, or in other words, when in single-sided printing mode. The distributed printing process in the duplex-printing mode will be explained below in the second embodiment.

The description of the distributed printing process will proceed using the specific example shown in Fig. 4. In the specific example shown in Fig. 4, a first print job JB1, for which distributed printing is specified, is sent from the client CL to the printer PRT1. The distribution controller 50 of the printer PRT1 that has received the first print job JB1 distributes the printing request by the first print job to four printers, PRT1 through 4PRT4, as the destination printers.

The first print job JB1 that is sent from the client CL to the printer PRT1 is sent as communications data having a header 400 which contains "IP1" as the destination IP address DA and contains "59100" as the destination port number DP. Actually, the first print job JP1 is divided into a plurality of TCP packets, with header 400 added to each of the divided packets. However, for ease in understanding the figure, Fig. 4 shows a single header 400 added to the entirety to the first print job JB1. This same approach will be used for the figures for the second print jobs JB21 through JB24, described below.

The job control language area 501 of the first print job JB1 includes the aforementioned total page count information TP, and in the example shown in Fig. 4, the total page count Q is written as 10. On the other hand, in the print job that is sent as the first print job JB1, the need to include print data that does not require printing is unusual. Consequently, in the job control language area 501 of the first print job JB1, normally either the page specification information PE is not included, or a page specification information PE that specifies all of the pages that are described in the total page count information TP is included. As shown in Fig. 4, no page specification information PE is included in the first print job JB 1 in the present embodiment.

Print data corresponding to the total page count Q is written to the page description language area 502 of the first print job JB1 in page description language. In the example shown in Fig. 4, ten pages of print data DT is written to the page description language area 502.

The distributed printing process is a process that is performed by the distribution controller 50 included in the custom network board 100. When the printer PRT1 wherein the custom network board 100 is installed is in a state that can receive a print job, the distributed job receiving module 52 of the distribution controller 50 awaits the reception of the aforementioned first print job JB 1 (Step S102). When the first print job JB1, or in other words, when a print job wherein the destination port number DP is "59100" arrives from the client CL at the printer PRT1 (Step 102: Yes), then the distributed job receiving module 52 receives the first print job JB1 through the TCP/IP module 10. The distributed job receiving module 52 first receives the top section of the print job including the job control language area 501 (Step S104).

The distribution controller 50 obtains the total page count Q for which printing is requested by the received first print job (Step S106). Specifically, the distribution controller 50 reads out the job control language area 501 to obtain the total page count information TP that is included in the first print job.

Following this, the distribution controller 50 executes the destination printer specification process (Step S108). The destination printer specification process is a process that is executed by the distribution destination specification module 54 of the distribution controller 50. As is shown in Fig. 6, when the destination printer specification process has begun, the distribution destination specification module 54 acquires the IP addresses of the devices connected to the network (Step S202). If a distribution destination specification file is stored in the distribution destination specification file storage area 34 the distribution destination specification module 54 references the distribution destination specification file to acquire the IP address. The distribution destination specification file contains a list of IP addresses of the printers that are used as distribution destinations. The distribution destination specification file is stored in the printer PRT1 using, for example, the setup computer during the initial setup of the printer PRT1. Note that when the distribution destination specification file is used, the IP address "IP1" of the printer PRT1 itself would be listed in the distribution destination specification file if the printer PRT1 itself is to be used as a distribution destination.

If a distribution destination specification file is not stored, on the other hand, the distribution destination specification module 54 asks for the IP address of each device connected to the LAN by broadcasting an inquiry command using the SNMP manager 40 and obtains the IP addresses sent in response.

Next, the distribution destination specification module 54 obtains information regarding each device to which the obtained IP addresses are allocated (step S204). Specifically, the distribution destination specification module 54 issues a unicast inquiry to each device and obtains the model name and status of each device received in response to this inquiry.

The distribution destination specification module 54 then searches for printers that satisfy prescribed conditions from among the devices connected to the network based on the received model names and status information and specifies the found printers as destination printers (step S206). Examples of such prescribed conditions are provided below.

> 1. The printer is the same model as the printer PRT1.
> 2. The power to the printer is ON.
> 3. The remaining toner amount exceeds a prescribed threshold value.
> 4. The printer is online.
> 5. The printer is not busy (that is, the print engine 90 is not being driven).

All of the information regarding each of these conditions can be obtained via inquiry issued by the above-described SNMP manager 40. The first condition requiring that the printer have the same model name as the printer PRT1 is imposed in order to ensure accurate printing without print job data conversion in each destination printer when distributed printing is carried out. As a result, the quality of the printed product from each destination printer can be harmonized with respect to the resolution and font, for example. In addition, consistency regarding instructions regarding color printing and two-sided printing, for example, can be ensured. The reason that the model name inquiry is issued even to devices whose IP addresses are already specified in the distribution destination specification file is discussed below. That is, such inquiry is made to confirm that the printer is the same model as the printer PRT1 because the IP addresses written in the distribution destination specification file may be allocated to printers of models different from the printer PRT1, or to non-printer devices after the distribution destination specification file is created.

The second through fifth conditions are intended to prevent selection of a printer that cannot immediately perform printing as a destination printer. 'The printer is online' means that the printer is not in an offline state, for example, out of paper or in an error state due to paper jam.

The distribution destination specification module 54 then determines whether or not at least one destination printer has been specified (step S208). If at least one destination printer have been specified (step S208:YES), the distribution destination specification module 54 ends the destination printer specification process. If no destination printer has been specified (step S208:NO), the distribution destination specification module 54 waits for a prescribed period of time (step S210) and the repeats the operations of steps S202-S208. The explanation will continue below, assuming the case wherein a total of four printers, that is all of the aforementioned printers PRT1 through PRT4, have been specified as destination printers in this process.

The explanation will continue, returning to Fig. 5. When the destination printers have been specified, the distribution controller 50 determines a page to be assigned respectively to each of the designated destination printers (Step S 110). The determination of the page to be assigned is performed by the page assignment module 56 of the distribution controller 50. The page assignment module 56 divides the plurality of pages for which printing is required into the same number of groups as the number of destination printers that have been specified to assign all of the pages for which printing is required to any of the destination printers. And the page assignment module 56 assigns a page included in one of the groups of pages, group-by-group, to each of the destination printers. Specifically, the page assignment module 56 determines the starting page number S and the ending page number E for each of the destination printer.

Here the page count of the page assigned to each of the destination printers is determined based on the following two approaches:

    1. Insofar as is possible, the assignment of the same number of pages to each of the destination printers; and
    2. When it is not possible to assign the exact same numbers, in other words, when the total page count Q is not divisible by the number of destination printers M, the remainder is assigned one page at a time sequentially beginning with the destination printer to which is assigned the pages that are earliest in the print order, in other words.

Fig. 7 illustrates the number of page assigned to each of the destination printers calculated using the approaches above in a case of distribution to four destination printers. The lower the destination printer number m of the destination printer, the earlier the pages in the page order that are distributed to that destination printer. As is shown in Fig. 7, when the total page count Q requiring printing is divisible by the number of destination printers M, then an equal page count is assigned to each of the destination printers. For example, if the total page count Q is 12 and the number of destination printers M is 4, then three pages are assigned to each of the destination printers. On the other hand, if the total page count Q is not divisible by the number of destination printers M, then the remaining pages are assigned to the destination printers to which the pages earliest in the page sequence are assigned. For example, if the total page count Q is 14 and the number of destination printers M is 4, then the extra two pages that are remaining after the total page count has been divided by the four destination printers will be assigned, one page each, to the two destination printers to which the pages that are earliest in the page sequence are assigned.

A specific method of calculating for determining the above-explained page assignments will be explained below. It is assumed that the total page count requiring printing is Q, the number of destination printers is M, and the destination printer number that is assigned in the sequence in which the pages are assigned sequentially in page order is m. In this case, the page count P (m) of the page assigned to m-th destination printer is calculated by Equation (1), below:

$$P(m) = Int\left\{ \frac{Q + (M - m)}{M} \right\} \qquad \dots (1)$$

Here the mathematical function Int (a) in the equation (1) is a mathematical function for producing the integer part of a value a. For example, Int (3.23) = 3. The values shown in the table shown in Fig. 7 can be calculated by substituting the values for Q, M, and m into this equation. Using P(m) the starting page number S(m) and the ending page number E(m) of the pages assigned to the m-th destination printer are calculated using, respectively, Equations (2) and (3).

$$S(1) = 1, S(m) = S(1) + \sum_{k=1}^{m-1} P(k) \quad (2 \le m \le M) \ \dots (2)$$

$$E(m) = \sum_{k=1}^{m} P(k) \quad (1 \le m \le M) \ \dots (3)$$

As can be understood from the explanation above, the starting page number S(m) and ending page number E(m) of the assigned pages is given as a mathematical function of the total page count Q, the number of destination printers M, and the destination printer number m. In the specific example shown in Fig. 4, Q = 10 and M = 4, and thus the results are:

First destination printer (printer PRT1): S(1) = 1, E(1) = 3
Second destination printer (printer PRT2): S(2) = 4, E(2) = 6
Third destination printer (printer PRT3): S(3) = 7, E(3) = 8
Fourth destination printer (printer PRT4): S(4) = 9, E(4) = 10

When, for each of the destination printers, the starting page number S(m) and the ending page number E(m) of the assigned pages has been calculated, or in other words, when the page to be assigned to each of the destination printers have been determined, then the distribution controller 50 sends one of the second print jobs respectively, requesting the assigned page of printing, to each of the destination printers (Steps S112 through S114). The sending of the second print jobs is performed by the print job sending module 58 of the distribution controller 50. Fig. 4 shows the second print jobs JB21 through JB24 that are sent to the respective printers PRT1 through PRT4 as the destination printers.

As is shown in Fig. 4, the IP addresses "IP1," "IP2," "IP3," and "IP4," of the printers PRT that are the respective distribution destinations are included, as the destination IP addresses DA, in the headers 400 of the communications data for sending the second print jobs JB21 through JB24. Additionally, "9100" is written as the destination port number DP in each of these headers 400.

The job control language areas 501 of the second print jobs JB21 through JB24 have the aforementioned page specification information PE added to the job control language area 501 of the first print job JB1. The page specification information PE includes the starting page number S(m) and the ending page number E(m) of the assigned pages for each of the destination printers, calculated in Step S 110, above.

The page description language areas 502 for the second print jobs JB21 through JB24 are identical to the page description language area 502 for the first print job JB1. That is, the page description language areas 502 of the second print jobs JB21 through JB24 have the print data corresponding to the total page count Q, written in the page description language. In the example in Fig. 4, ten pages worth of print data DT is written in the page description language area 502.

The transmission of the second print job JB21 through JB24 will be explained step by step. First, the print job sending module 58 of the distribution controller 50 sends the top section of the second print jobs JB21 through JB24, which include the job control language areas 501, after adding the page specification information PE to the job control language area 501, to each of the printers PRT1 through PRT4 (the destination printers) (Step S112). Next the distributed job receiving module 52 of the distribution controller 50 receives the part of the first print job JB1 that is not the top section, and sends this part sequentially to each of the printers PRT1 through PRT4 (Step S114). After this, a decision is made as to whether or not all parts of the first print job JB1 have been received (Step S 116). If the distribution controller 50 has determined that not the entire first print job JB1 has been received (Step S116: No), then processing returns to Step S114. On the other hand, if the distribution controller 50 determines that the reception of the first print job JB 1 has been completed, (Step S 116: Yes), then this process is terminated.

Processing in the Destination printers

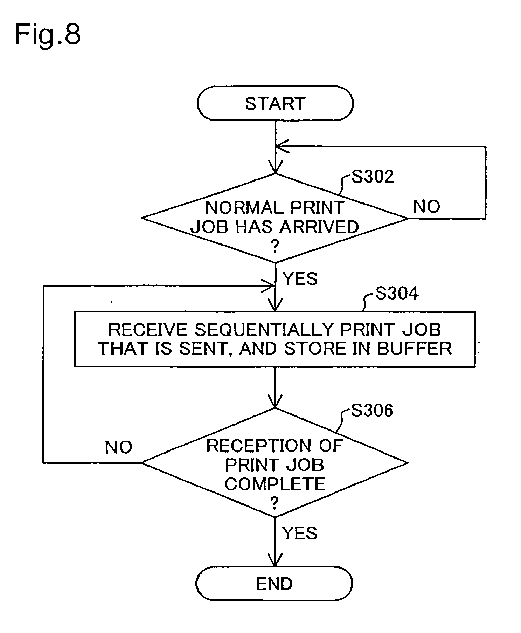

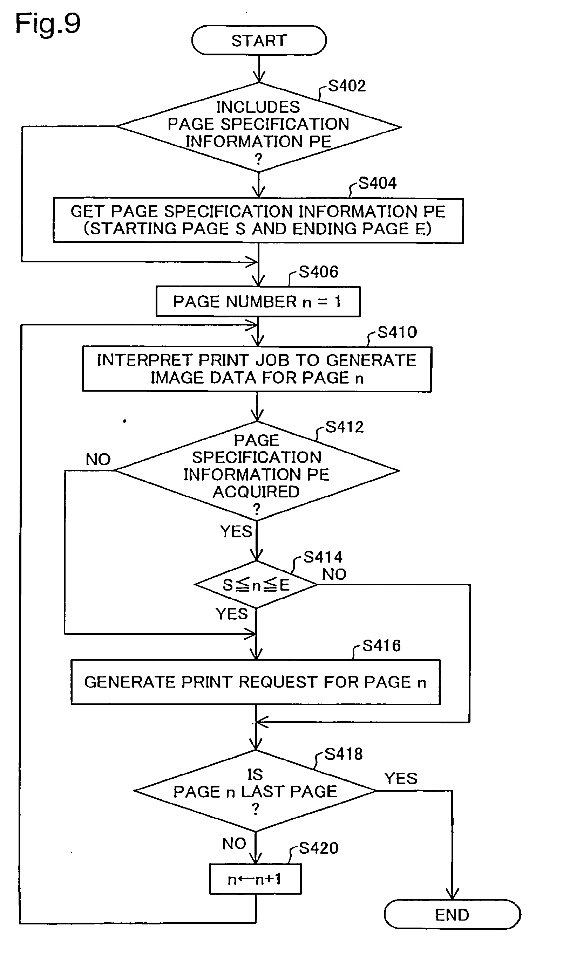

Next the processes in the destination printers (printers PRT1 through PRT4 in the example shown in Fig. 4) will be explained next while referencing Fig. 8 and Fig. 9. Fig. 8 is a flowchart of a processing routine for the reception process for a normal print job (including a second print job). Fig. 9 is a flowchart of a processing routine for a printing process for a normal print job, including a second print job.

First the process of receiving a normal print job will be described. In this process, processing is performed by the print job receiving module 60 of the printer PRT. When the printer PRT is in the state of receiving a print job, the print job receiving module 60 awaits the arrival of a normal print job, including a second print job (Step S102). When a normal print job, that is, a print job wherein the destination port number DP is "9100" arrives (Step S302: Yes), the print job receiving module 60 sequentially receives the print job that is sent through the TCP/IP module 10, and stores the print job in the printer buffer 82 (Step S304). The print job receiving module 60 determines whether or not the entirety of the print job has been received (Step S306). When the device to which the print job is sent has sent the entirety of the print job, a disconnect request for the communications connection for sending the print job is sent. Consequently, the print job receiving module 60 is able to determine whether or not the entirety of the print jobs has been received based on whether or not there is a disconnect request for the communications connection. When the print job receiving module 60 determines that the print job has not been received completely (Step S306: No), processing returns to Step 304. If the print job receiving module 60 determines that the print job has been received in its entirety (Step S306: Yes), then the receiving process is terminated.

Next the normal print job printing process will be explained. This printing process is a process that is executed by the printer controller 80 of the printer PRT. When print job data has been received from the print job receiving module 60, or in other words, when the storage of a print job into the printer buffer 82 by the aforementioned print process is started, the printer controller 80 starts the printing process.

When starting the printing process, the printer controller 80 first determines whether or not page specification information PE is included in the print job (Step S402). Specifically, the printer controller 80 searches for the aforementioned page specification information PE from the job control language area 501 of the print job that is stored in the printer buffer 82 to determine whether or not there is page specification information PE. If it is determined that there is page specification information PE (Step S402: Yes), then the printer controller 80 acquires the page specification information PE, that is, the starting page number S and the ending page number E (Step S404), and processing jumps to Step 406. On the other hand, if it is determined that there is no page specification information PE (Step S402: No), then the printer controller 80 jumps to Step 406 as is.

The printer controller 80 then initializes the page number n to be processed, defining n=1 (Step S406). The printer controller 80 interprets the print job to generate the image data for page n (Step S410). Specifically, the printer controller 80 generates the image data that is used by the print engine 90 in printing, for example, the dot data that conforms to the resolution of the print engine 90, from the print data that is written in the page description language. The page description language area 502 of the print job contains print data in the order of the pages, and so the printer controller 80 interprets, page-by-page, the print data included in the page description language area 502, starting at the beginning.

When the image data for page n has been generated, then the printer controller 80 determines whether or not page specification information PE has been obtained in Step S404 (Step S412). If the printer controller 80 determines that the page specification information PE has been obtained (Step S412: Yes), then the starting page number S and the ending page number E, obtained as the page specification information PE, are used to determine whether or not S ≤ n ≤ E (Step S414). That is, the print control 80 determines whether or not the page n is a page that is specified by the page specification information PE.

If the printer controller 80 determines that page n is a page that is specified by the page specification information PE (Step S414: yes), or if no page specification information PE has been obtained (Step S412: No), then a print request for page n is issued to the print engine 90 (Step S416), and processing jumps to Step S418. When the print engine 90 receives the print request from the printer controller 80, the print engine 90 uses the image data generated by the printer controller 80 to print page n. On the other hand, if the printer controller 80 determines that page n is not specified by the page specification information PE (Step S414: No), then processing jumps to Step S418 without the printer controller 80 issuing the print request.

Following this, the printer controller 80 determines whether or not the page n is the last page of print data included in the page description language area 502 (Step S418). If the printer controller 80 determines that page n is the last page (Step S418: Yes), then the print process is terminated. On the other hand, if the printer controller 80 determines that page n is not the last page (Step S418: No), then the page number n to be processed is incremented (Step S420) and processing returns to Step S410. In other words, the printer controller 80 repeats the processes in Steps S410 through S418 for the next page.

By performing the print processes as described above, when page specification information PE is included in the print job, the printer PRT performs printing for the pages that are specified by the page specification information PE, but does not perform the printing for the other pages. Moreover, the printer PRT prints all of the pages described in the page description language area 502 of the print job, if there is no page specification information PE in the print job.

Here the reason why the print data is interpreted to generate image data for pages aside from those that are specified by the page specification information PE (that is, for pages that will not be printed) in Step S410 will be explained below. The first reason is that, in the page description language area 502, the print data for pages having large page numbers may be described by referencing print data of pages having small page numbers. For example, objects that are the same for each page (for example, headers and footers), may be generated so as to be included only once with the print data of the initial page, and these object may not be included in the print data of the following pages. In such a case, the printer controller 80 generates the image data of the later pages by using a portion of the image data of the initial page. That is, in order to perform the printing of the assigned page it may be necessary to use image data of the page prior to the assigned page, and thus the printer controller 80 generates the image data sequentially, starting at the beginning, including pages that will not be printed. Note that the time required by the printer controller 80 to generate the image data by interpreting the print data is extremely short when compared to the time required for the print engine 90 to actually perform the printing. Consequently, there is essentially no time lost in generating the image data for the pages that will not be printed.

As can be understood from the explanation above, when the printers PRT1 through PRT4, as the destination printers, receive the second print jobs JB21 through JOB24, which include the page specification information PE, printing is performed only for the assigned page that are specified by the page specification information PE. The result is that each of the destination printers performs printing for its respective assigned pages to complete the printing required by the first print job JB1.

In the first embodiment as described above, the custom network board 100 installed in the printer PRT1 makes it possible to execute a distributed printing process on a page basis. Accordingly, distributed printing on a page basis can be realized in a simple structure comprising a plurality of printers PRT, without using an external device such as a specialized distribution server.

Furthermore, the second print jobs JB21 through JB24 have the starting page number S and the ending page numbers E, as page specification information PE, added to the job control language area 501 of the first print job JB1. Consequently, the distribution controller 50 of the custom network board 100 can generate the second print jobs JB21 through JB24 with ease. The result is that the processing load on the distribution controller 50 can be reduced, making it possible to simplify the custom network board 100. Explaining in greater detail, conventional distributed printing system may have to generate new print data for assigned pages based on the print data included in the first print job JB1. Such a distributed printing system may not be able to generate the print data for the assigned pages by merely dividing up the print data included in the first print job JB1, due to, for example, cases wherein print data from earlier pages is referenced by print data from later pages, as described above. In some cases, there was the risk that it would be necessary to have a process that would reconvert image data for the assigned pages into page description language, after the page description language has been converted to image data. In such a case, the distribution controller has been necessary to provide a structure for achieving the functions for generating the print data for the assigned pages. However, in the present embodiment, the print data DT that is included in the first print job JB1 is included as is in the second print jobs JP21 through JP24, no such structure is required. The result is that it is possible to simplify the structure of the distribution controller 50, to achieve distributed printing on a page basis with a simpler structure.

Moreover, the client CL need only send the first print job JB1 to the printer PRT1 (the distribution controller 50) only once, and need not specify the destination printers or the assigned pages. Consequently, the processing load on the client CL can also be reduced to essentially the same as in a normal printing process.

Furthermore, in the first embodiment the determination of the assigned pages for each of the individual destination printers was performed based on equations (1) through (3), described above. That is, the assigned pages were calculated based on the total page count Q, the number of destination printers M, and the number of each individual destination printer m. The total page count information TP for specifying the total page count Q is included in the job control language area 501 of the first print job JB1, so the distribution controller 50 is able to find the total page count easily and thus is able to determine the appropriate the assigned pages easily based on the total page count.

Furthermore, the job control language area 501, which includes the total page count information TP, is placed further towards the beginning of the first print job JB1 than the page description language area 502. That is, the total page count information TP is structured so as to be received by the print job receiving module 60 prior to the reception of the print data DT. Consequently, the distribution controller 50 is able to generate the job control language area 501 for the second print jobs JB21 through JB24 by determining the assigned pages as long as the top section, included in the job control language area 501, of the first print job JB1 has been received. As a result, the distribution controller 50 may first send, to each of the destination printers, the top sections that include the job control language area 501, in the second print jobs JB21 through JB24 and then, after the remaining parts of the first print job JB1 have been received, send the remaining parts of the second print jobs JB21 through JB24 to each of the destination printers (see Fig. 5). Consequently, the network board 200 need not spool the entirety of the first print job JB1. As a result, in the custom network board 100 it is possible to reduce the capacity of the buffer 36 that spools the first print job JB1.

Moreover, the page count in the assigned pages for each of the destination printers, as can be seen in equations (1) through (3) and in Fig. 7, are essentially equal. This makes it possible to complete the distributed printing on a page basis in a short period of time, when the total page count Q is not divisible by the number of destination printers M, the numbers of pages included in the assigned page group that include the pages that are earlier in the page sequence are increased (Fig. 7). As was explained above in reference to Fig. 9, when each of the printers PRT that are destination printers perform the printing for a print job that include page specification information PE, the entirety of the print data DT is interpreted from the beginning, regardless of whether or not any given page will actually be printed. The printer PRT performs the actual printing with the timing with which the print data has been interpreted for a page that is to be printed. Consequently if it is assumed that the speed with which the print data is interpreted is the same in each printer PRT, then the printer PRT that prints a page that is earlier in the page sequence (that is, that has a smaller page number) can start printing before a printer PRT that prints a page that have later page numbers (larger page numbers). Because of this, increasing the page count of the assigned page that include pages that are earlier in the page sequence makes it possible to complete the distributed printing in a page basis in a shorter period of time.

B. Second Embodiment:

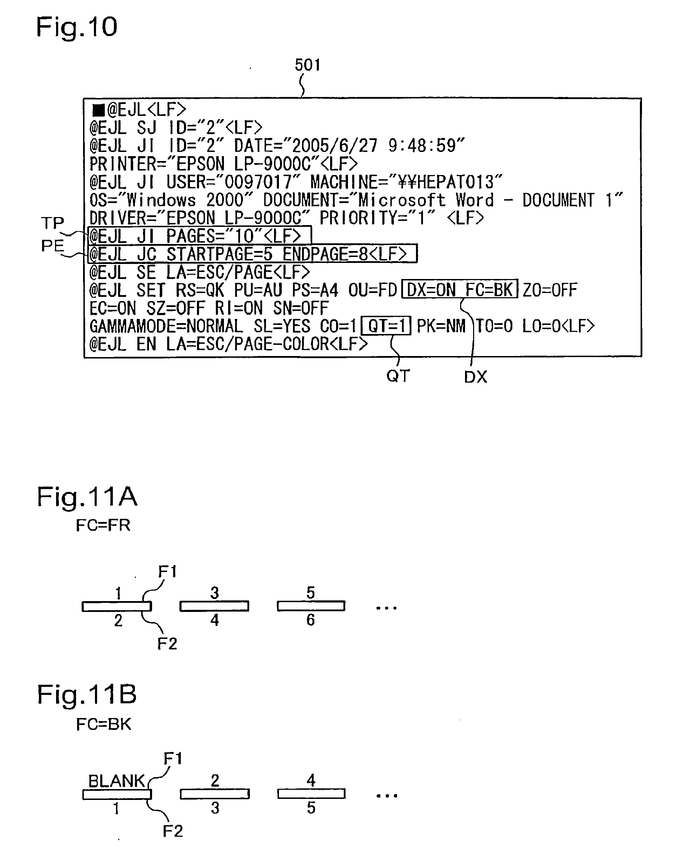

A distributed printing process in a duplex-printing mode will be explained as a second embodiment. The schematic structure of the distributed printing system in the second embodiment is identical to the structure in the first embodiment, explained above, referencing Fig. 1 and Fig. 2, and thus an explanation thereof is omitted. A print job requiring the duplex-printing mode will be explained referencing Fig. 10 and Figs. 11A-B. Fig. 10 is an explanatory diagram illustrating one example of a job control language for a print job requiring the duplex-printing mode. Figs. 11A-B are schematic diagrams for describing the printed form in the duplex-printing mode.

The print job requiring printing in the duplex-printing mode, as shown in Fig. 10, is written as "DX = ON" in the printing mode specifying information DX included in the job control language area 501. Moreover, when "DX = ON" is included in the printing mode specifying information DX, initial page print face specification information is included in the printing mode specifying information DX. The initial page print face specification information is either "FC = FR" or "FC = BK."

The duplex-printing mode is a printing mode wherein pages are printed page-by-page on each side of a single printer paper sheet. As is shown in Fig. 11, the face that is printed first is defined as the first face F1, and the face that is printed afterwards is defined as the second face F2. When the initial page print face specification information is "FC = FR," then, as shown in Fig. 11 A, the initial page (page No. 1) is printed on the first face F1, and the next page (page No. 2) is printed on the second face F2. Consequently, when the initial page print face specification information is "FC = FR," then when this print job is printed on a single printer PRT, then the odd number pages are each printed on the first face F 1 of the printer paper sheets, and the even number pages are printed on the second face F2 of the printer paper sheets.

On the other hand, when the initial page print face specification information is "FC = BK," then, as shown in Fig. 11B, the first face F1 is left blank, and the initial page (page No. 1) is printed on the second face F2. The next page (page No. 2) is printed on the first face F1 of the next printer paper sheet. Consequently, when the initial page print face specification information is "FC = BK," then when the print job is printed on a single printer PRT, the even number pages are printed on the first face F1 of each printer paper sheet, and the odd number pages are printed on the second face F2.

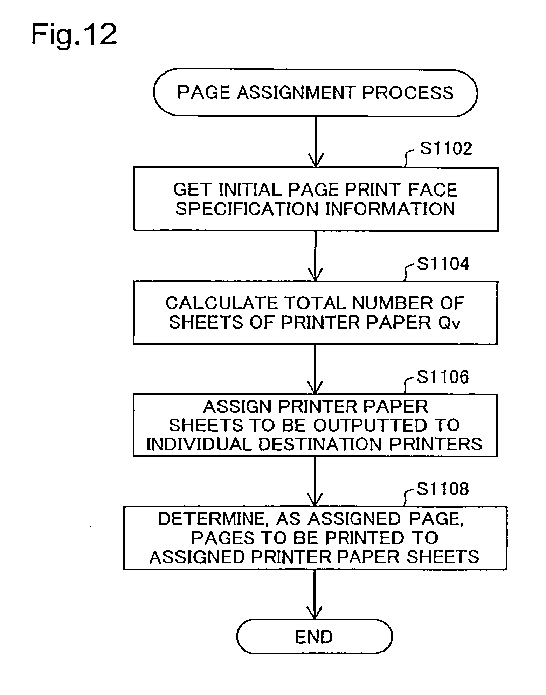

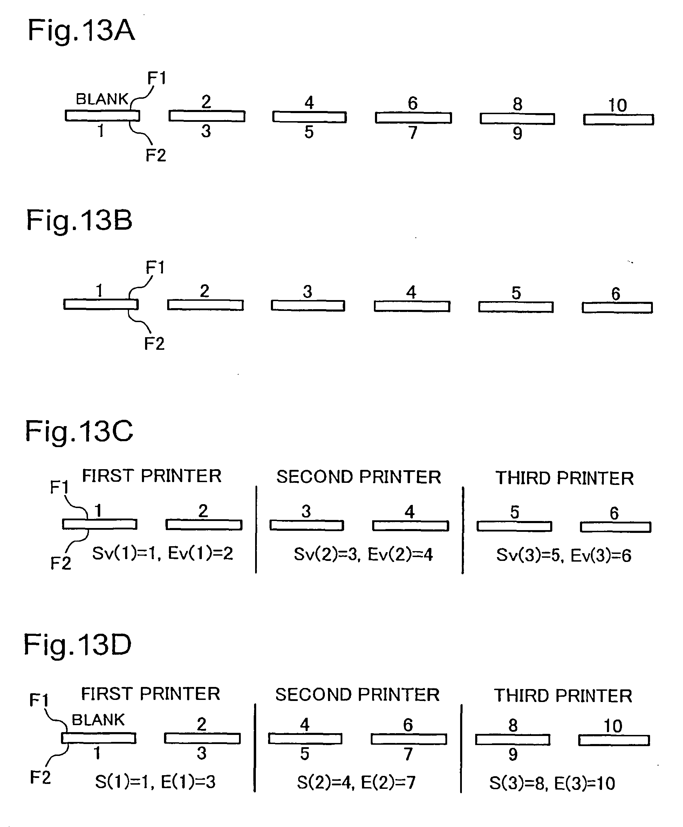

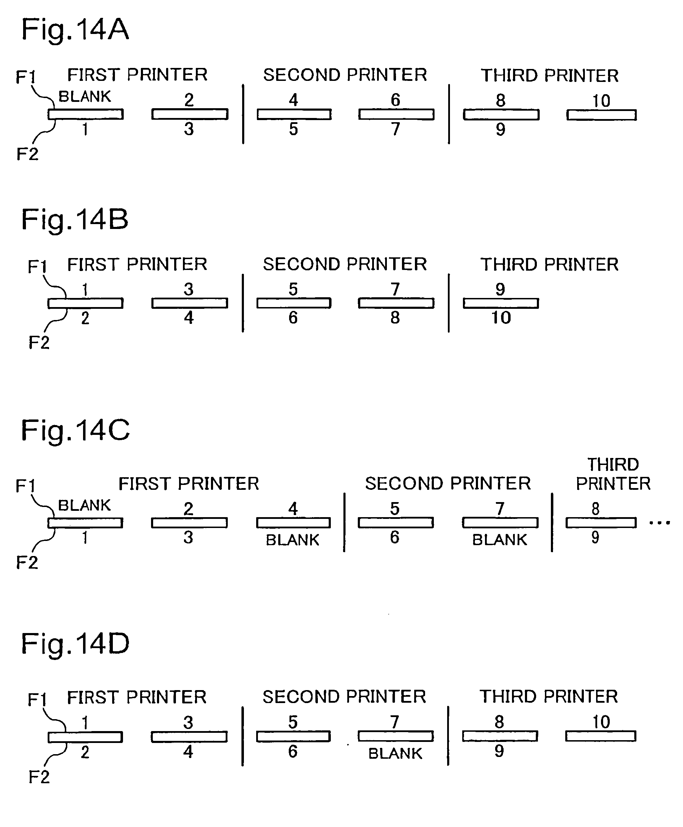

Next the distributed printing process will be explained for the case of the first print job JB1 being a print job that requires printing in the duplex-printing mode, referencing Fig. 12 through Figs. 14A-D. Fig. 12 is a flowchart of a processing routine in a page assignment process in duplex-printing mode. Figs. 13A-D are schematic diagrams for explaining the determination of the assigned pages in the duplex-printing mode. Figs. 14A-D are schematic diagrams for explaining the results of determining the assigned pages in duplex-printing mode.

When the first print job JB 1 is a print job that requires printing in the duplex-printing mode, the fundamental processing steps in the distributed printing process are the same as the processing steps in the distributed printing process in the first embodiment, explained above in reference to Fig. 5. The point of difference between the two is the method by which the assigned pages are determined in Step S 110 of Fig. 5. The determination of the assigned pages in the duplex-printing mode will be explained below.

Fig. 12 shows a flowchart illustrating in greater detail the process in Step S110 in the distributed printing process when in the duplex-printing mode. First the page assignment module 56 of the distribution controller 50 acquires the aforementioned initial page print face specification information (Step S 1102). Following this, the page assignment module 56 calculates the total number of printer paper sheets Qv to be outputted (Step S 1104). The total number of printer paper sheets Qv is calculated using equation (4), below.

$$Qv = \mathrm{Int}\left\{\frac{Q+b+1}{2}\right\} \quad \ldots(4)$$

In Equation (4), Q is the total page count requiring printing, acquired in Step S106 of Fig. 5. b is a variable that is set according to the initial page print face specification information. If the initial page print face specification information is "FC = FR," or in other words, if the initial page is to be printed on the first face F1, then the variable b is set to 0. On the other hand, if the initial page print face specification information is "FC = BK," or in other words, if the initial page is to be printed on the second face F2, then the variable b is set to 1. ("Int" is a mathematical function that produces the integer part of a number, as explained for equation (1), above.) The example illustrated in Figs. 13A-D shows the case wherein a first print job wherein the total page count Q is 10 and the initial page print face specification information is "FC = BK," is to be distributed to three destination printers. In this case, as is shown in Fig. 13B, the total number of printer paper sheets Qv is set to 6. Note that Fig. 13A shows conceptually the printing results when this first print job JB1 is printed on a single printer PRT.

The page assignment module 56 next assigns the printer paper sheets to be outputted to the individual destination printers (Step S 1106). Specifically, the page assignment module 56 determines the starting sheet number Sv and the ending sheet number Ev for the printer paper sheets assigned for each destination printer. The sheet numbers Sv and Ev are numbers assigned sequentially from the sequence of the printer paper sheets whereon the pages are printed sequentially. The number of printer paper sheets assigned is determined based on the same approaches used for determining the page count of the assigned pages in the first embodiment; that is:

1. Insofar as is possible, the assignment of the same number of printer paper sheets to each of the destination printers; and
2. When it is not possible to assign the exact same numbers, or in other words, when the total number of printer paper sheets Qv is not divisible by the number of destination printers M, the remainder is assigned one sheet at a time sequentially beginning with the destination printer to which is assigned the pages that are earliest in the print order.

Specifically, the starting sheet Sv and the ending sheet Ev are calculated using equations (5) through (7) wherein the total page count Q in equations (1) through (3) in the first embodiment is replaced with the total number of printer paper sheets Qv.

$$Pv(m) = Int\left\{\frac{Qv + (M - m)}{M}\right\} \quad \ldots(5)$$

$$Sv(1) = 1, Sv(m) = Sv(1) + \sum_{k=1}^{m-1} Pv(k) \quad (2 \le m \le M) \ldots(6)$$

$$Ev(m) = \sum_{k=1}^{m} Pv(k) \quad (1 \le m \le M) \quad \ldots(7)$$

In the aforementioned equations (5) through (7), Pv (m), Sv (m), and Ev (m) represent, respectively, the number of printer paper sheets assigned to the m-th destination printer, the starting sheet number, and the ending sheet number. The example in Fig. 13C shows an example of a case wherein there are three destination printers, and the starting sheet numbers Sv (m) and the ending sheet numbers Ev (m) are set so as to assign two sheets each, of the total of six printer paper sheets to be outputted, to the destination printers.

Following this, the page assignment module 56 determines, as the assigned pages, the pages to be printed to the printer paper sheets that have been assigned (Step S1108). In the example illustrated in Fig. 13D, the pages to be printed to the first and second printer paper sheets assigned to the first destination printer (m=1) are pages 1 through 3. Consequently, the page assignment module 56 calculates, for the first destination printer, the following: Starting page number S (1) = 1, ending page number E (1) = 3. Using the same approach for the second and third destination printers as well, the respective calculations, as shown in Fig. 13D, are S (2) = 4, E (2) = 7, and S (3) = 8, E (3) = 10.

The specific equations by which the starting page number S (m) and the ending page number E (m) are calculated are shown by equations (8) through (9), below:

$$S(1) = 1, S(m) = 2 \times Sv(m) - b - 1 \ (2 \le m \le M) \ldots(8)$$

$$E(m) = 2 \times Ev(m) - b \ (1 \le m \le (M - 1)), E(M) = Q \ldots(9)$$

Here Fig. 14A shows an example of the assigned pages that is determined when the initial page is printed on the second face F2, in other words, when the initial page print face specification information is "FC = BK." Fig. 14V shows an example of the assigned pages that is determined when the initial page is printed on the first face F1, in other words, when the initial page print face specification information is "FC = FR." It can be seen that, when the assigned pages are determined using the equations (8) and (9), the assigned pages vary according to the printing face on which the initial page is printed. Specifically, when the initial page is printed on the second face F2 the ending page numbers E(m) in all of the assigned page groups with the exception of the assigned page group that includes the last page of the first print job JB 1 will be odd. Naturally, the ending page number E(M) for the assigned page group that includes the last page (page Q) will be the last page number Q. In the example illustrated in Fig. 14A the ending page numbers E(1) and E(2) of the assigned page groups for the first and second destination printers are, respectively, the odd numbers 3 and 7. The assigned page group for the third destination printer includes the last page (page 10), and so the ending page number E(3) is the last page number 10. On the other hand, when the initial page is printed on the first face F1, then the ending page numbers E(m) of the assigned page groups with the exception of the assigned page group that includes the last page of the first print job JB1, will be even. The ending page number E(M) of the assigned page group that includes the last page (page Q) will, of course, be the last page number Q. In the example illustrated in Fig. 14B, the ending page numbers E(1) and E(2) of the assigned page groups for the first and second destination printers are, respective, the even numbers 4 and 8. The assigned page group for the third destination printer includes the last page (page 10), so the ending page number E(3) will be 10.

When the starting page number S (m) and the ending page number E (m) have been determined for each of the destination printers, in other words, when the assigned pages have been determined for each of the destination printers, the distribution controller 50 performs the processes in Step S 112 and beyond in the same manner as in the first embodiment, as shown in the flowchart in Fig. 5.

The processing in the destination printers is the same as the processing in the first embodiment explained above in reference to Fig. 8 and Fig. 9, and thus further explanations are omitted.

In addition to the operation and effects as described above in the first embodiment, the second embodiment provides the following operations and effects that are unique to the duplex-printing mode. The pages that would be printed on a single print medium if a single printer PRT were used to print the first print job JB1 are assigned to a single destination printer in distributed printing. Accordingly, it is possible to reproduce the identical printing effects when printing the first printing job JB1 in distributed printing as in the case wherein a single printer PRT is used to print the first print job JB1. The result is that the user is able to obtain the desired printing results through distributed printing when the user sends the print job in the same way as for normal printing, without being aware of the distributed printing.

Using the algorithm shown in the first embodiment to determine the assigned pages, without being aware that the duplex-printing mode is ON, would not be able to produce the desired printing results. Fig. 14C and 14D illustrate an example of a case wherein the assigned pages were determined using the same algorithm as shown in the first embodiment. Fig. 14C illustrates the case wherein the initial page is printed on the second face F2, and Fig. 14D illustrates a case wherein the initial page is printed on the first face F1. It can be seen that in either the case of Fig. 14C or the case of Fig. 14D, nothing will be printed on the second faces F2, which will thus be blank, of any of the printer pager sheets to be outputted.

Furthermore, because the numbers of pages assigned to each of the destination printers are nearly equal, it is possible to complete the distributed printing by the page unit in a shorter amount of time while still reproducing the same printing results as in the case when printing using a single printer PRT.

Moreover, because the assigned pages are determined depending on the initial page print face specification information, it is possible to reproduce the same printing results as when the first print job JB1 is printed on a single printer PRT, regardless of whether the initial page is printed on the first face F1, or printed on the second face F2.

C. Variations

First Variation:

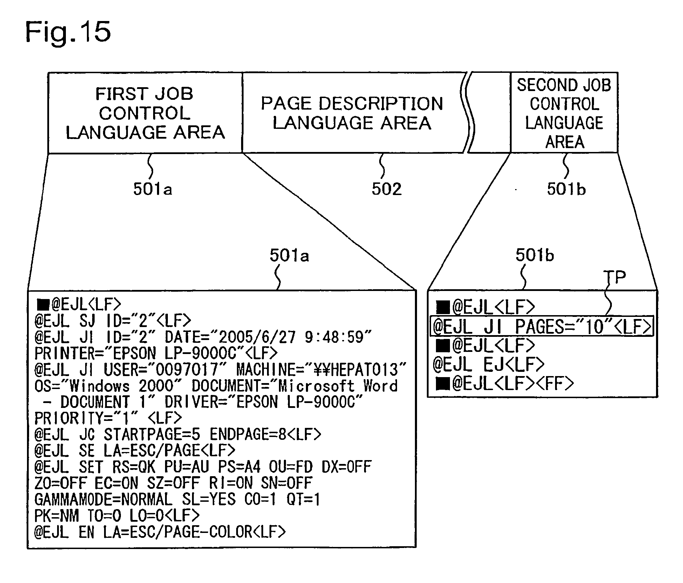

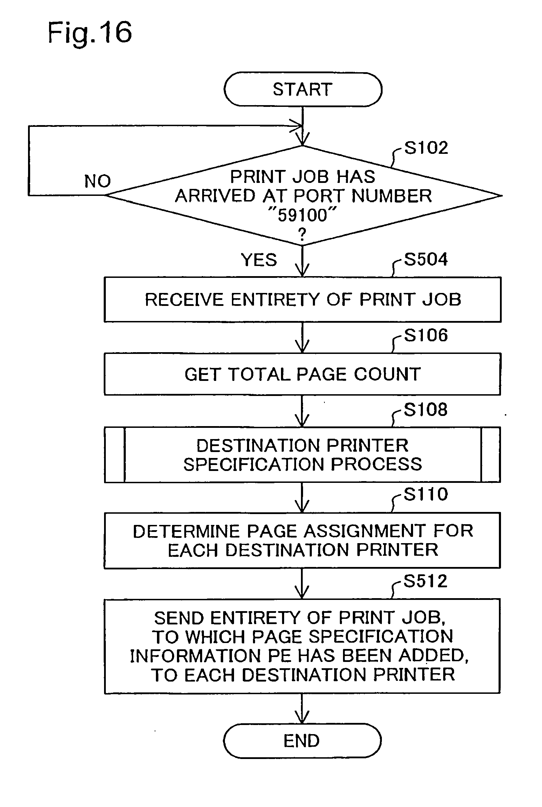

A first variation will be explained referencing Fig. 15 and Fig. 16. Fig. 15 is an explanatory diagram illustrating the data structure in a first print job JB 1 in a first variation. Fig. 16 is a flowchart of a processing routine in a distributed printing process in the first variation.

Unlike the first print jobs JB1 in the first and second embodiments, in the first print job JB1 in the first variation, the job control language area 501 is split into two parts, that is, split into a first job control language area 501A and a second job control language area 501B. The first job control language area 501 A is positioned prior to the page description language area 502, but the second job control language area 501B is positioned after the page description language area. In other words, when the first print job JB1 in the first variation is received by the distributed job receiving module 52 of the distribution controller 50, it is received in the sequence of the first job control language area 501A, the page description language area 502, and then the second job control language area 501 B. The second job control language area 501 B contains, among the information included in the job control language area 501 of the embodiment, the total number of pages information TP, while the first job control language area 501A contains other information. The first print job JB1 sometimes has this construction, depending on the specifications of the print controller 80 and the printer driver of the client CL.

The distributed printing process of this variation will now be explained. The differences between this process shown in Fig. 16 and the corresponding process of the embodiments described with reference to Fig. 5 are that step S504 shown in Fig. 16 is executed instead of step S104 shown in Fig. 5, and steps S512 shown in Fig. 16 is executed instead of steps 112-S 116 shown in Fig. 5.

In Step S504, the distributed job receiving module 52 of the distribution controller 50 receives not just the top section of the print job, but the entirety of the print job. Because, in the next step, Step S106, the distribution controller 50 must reference the total page count information TP in order to obtain the total page count Q, it is necessary to receive the second job control language area 501B, which is received at the end of the print job.

In Step S512, the print job sending module 58 of the distribution manager 50 generates second print jobs JB21-JB24 by adding page specification information PE in the first print job JB1, and sends the generated print jobs to the respective destination printers. In step S504, the entirety of each print job is received, and so, as in the first embodiment, there is no need to repeat the receipt of the first print job JB1 and the transmission of the second print jobs JB21-JB24 as in the first and second embodiments.

Because the processing is identical for the other steps in this variation and in the first and second embodiments, the same symbols used in Fig. 5 will be used in Fig. 16, and further description will be omitted.

The first variation requires that the entirety of the first print job JB 1 be received all at once, and thus it is necessary to secure a region in the buffer 36 large enough to store the entirety of the first print job JB 1. Otherwise, the operations and effects are identical to those of the first and second examples of embodiment.

Second Variation

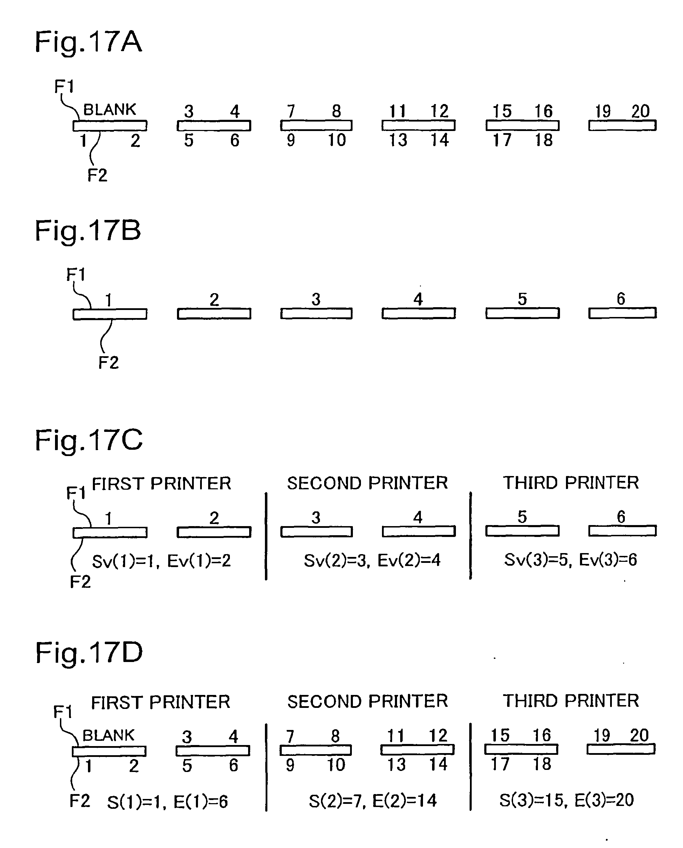

While in the second embodiment described above, a duplex-printing mode that prints one page each on both sides of the printer paper was used, it is possible to apply the present invention also to other printing modes wherein a plurality of pages is printed to a single printer paper sheet. The other printing mode may be, for example, a printing mode that prints a plurality of pages lined up on the first face F1 of a single printer paper sheet, and, specifically, may be a reduced-size printing mode. Conversely, the other printing mode may be a printing mode that prints a plurality of pages on both the first face F 1 and the second faceF2, and, specifically, may be a reduced-size duplex-printing mode. The use of a printing mode that prints two pages each on both the first face F 1 and the second face F2, in other words, that prints four pages on a single printer paper sheet, will be explained as the second variation. Figs. 17A-D are schematic diagrams for explaining the determination of the assigned pages in a second variation.

In the second variation, the processing steps for determining the assigned pages is fundamentally identical to the processing steps in the second embodiment, as described in reference to Fig. 12. Fig. 17A illustrates schematically the printing results when printing the first print job JB1 to a single printer PRT. In the example illustrated in Figs. 17A-D, printing begins with the second face F2, and thus the page print face specification data obtained is "FC = BK." And, the total page count Q is 20, and the number of destination printers is 3. As in the second embodiment, the page assignment module 56 uses the total page count Q to calculate the total number of printer paper sheets to be outputted Qv, and assigns the printer paper sheets to be outputted to each of the destination printers. In the example illustrated in Fig. 17B, the total number of printer paper sheets Qv is determined to be 6, and, as shown in Fig. 17C, the printer paper sheets to be outputted are assigned two each to each of the destination printers.

Furthermore, the page assignment module 56 determines, as the assigned pages, the pages to be printed to the assigned printer paper sheets. In the example illustrated in Fig. 17D, two pages are assigned to the first printer paper sheet, and four pages each are assigned to the other printer paper sheets (except to the printer paper sheet to which the last page is assigned). The result is that a starting page number S (m) and an ending page number E (m) for the assigned pages for each of the destination printers are calculated as shown in Fig. 17D.

As shown in the example above, the printing results that are identical to the case wherein the first print job JB1 is printed on a single printer PRT can be reproduced in a variety of printing modes wherein a plurality of pages is printed to a single printer paper sheet.

Other Variations:

While in the second embodiment described above, the initial page print face specification information was obtained in order to determine the assigned pages in Step S 1102 of Fig. 12, if there is data able to specify the page count printed on the initial printer paper sheet on which to print the initial page, then it will be possible to determine the assigned pages. Consequently, the page count of the pages printed on the initial printer paper sheet on which the initial page is printed can be included in the job control language area 501, and that data can be obtained in Step S1102.

While in the first embodiment, the first print job JB1 did not include page specification information PE, the page specification information PE, which specifies a portion of the pages in the print data that is included in the page description language area 502 of the first print job JB1 may be included.

In such a case, the distribution controller 50 will acquire the page specification information PE instead of the total page count information TP when acquiring the total page count information TP (Fig. 5 (Step S106)). The distribution controller 50 counts the page count in the range specified by the page specification information PE for use as the total page count Q for which printing is required.

Moreover, the distribution controller 50 may generate the second print jobs JB21 through JB24 by converting the page specification information PE that is included in the first print job JB1 into page specification information PE that specify the assigned pages, after determining the assigned pages. In such a case, the initial page number and the ending page number in the page specifying data PE in the second print job are adjusted so as to specify appropriately the assigned pages in the range of pages specified by the page specification information PE included in the first print job JB1. For example, let us consider the case wherein the ten pages from page 5 through page 14 are specified by the page specification information PE in the first print job JB1. Let us also assume that these 10 pages are distributed to four destination printers in the same way as illustrated in Fig. 4. Hence the assigned pages will be determined by the aforementioned equations (1) through (3) to be as follows:

First destination printer (printer PRT1): S(1) = 1, E(1) = 3

Second destination printer (printer PRT2): S(2) = 4, E(2) = 6

Third destination printer (printer PRT3): S(3) = 7, E(3) = 8

Fourth destination printer (printer PRT4): S(4) = 9, E(4) = 10

However, the page specification information PE that is actually included in the second print jobs JB21 through JB24 will have "4" added to make adjustments to each of the values in order to print the 4th page through the 14th page.

Consequently, the starting page number Sa (m) and the ending page number Ea (m) for the assigned pages after adjustment will be:

First destination printer (printer PRT1): Sa (1) = 5, Ea (1) = 7

Second destination printer (printer PRT2): Sa (2) = 8, Ea (2) = 10

Third destination printer (printer PRT3): Sa (3) = 11, Ea (3) = 12

Fourth destination printer (printer PRT4): Sa (4) = 13, Ea (4) = 14

In the aforementioned first and second examples of embodiment, the various function modules of the printers PRT that are structured in software may instead be structured in hardware, and that which is structured in hardware may instead be structured in software.

The print engine in the aforementioned first and second embodiment may use a variety of types. For example, the print engine is not limited to only a laser type, but may use an ink jet type, a sublimation type, a dot-impact type, a thermal transfer type, or any other type of print engine.

While the print control technology pertaining to the invention have been shown and described on the basis of the embodiments and variations, the embodiments of the invention described herein are merely intended to facilitate understanding of the invention, and implies no limitation thereof. Various modifications and improvements of the invention are possible without departing from the scope thereof as recited in the appended claims, and these will naturally be included as equivalents in the invention.

**Claims**

1.   A printing controller that is incorporated in at least one of a plurality of printing apparatuses connected to a network, the printing controller comprising:

a receiving module that receives a first print job requesting a plurality of pages of printing;

a distribution destination specification module that specifies, from among the plurality of printing apparatuses, a plurality of destination printing apparatuses as distribution destinations for the plurality of pages of printing requested by the first print job;

a page assignment module that assigns a page to each of the plurality of destination printing apparatuses by dividing the plurality of pages of printing requested by the first print job into a same number of groups as a number of the plurality of destination printing apparatuses; and

a sending module that sends one of second print jobs respectively to each of the plurality of the destination printing apparatuses, wherein each of the second print jobs requests the assigned page of printing to each of the plurality of the destination printing apparatuses.

2.   A printing controller according to Claim 1, wherein the first print job includes print data corresponding to the plurality of pages of printing to be requested, and wherein each of the second print jobs includes page specifying data for specifying the assigned page, along with including whole of the print data.

3.   A printing controller according to Claim 2, wherein each of the second print jobs includes the first print job to which the page specifying data is added.

4.   A printing controller according to Claim 2 or Claim 3, wherein the assigned page are continuous, and wherein the page specifying data includes data for specifying starting page and ending page of the assigned page.

**5.** A printing controller according to any of Claims 1 through 4,
wherein the first print job includes page count data for specifying a total page count of the plurality of pages of printing to be requested,
and wherein the page assignment module determines a page count of the assigned page, based on the page count data.

**6.** A printing controller according to Claim 5,
wherein the first print job includes print data corresponding to the plurality of pages of printing to be requested,
and wherein when the first print job is received by the receiving module, the page count data is received prior to the print data.

**7.** A printing controller according to any of Claims 1 through 6, wherein
the page assignment module makes each of the assigned pages approximately equal.

**8.** A printing controller according to Claim 7,
wherein each of the second print jobs includes whole of print data corresponding to the plurality of pages of printing requested by the first print job,
wherein, when printings that are requested by the second print jobs are executed, each of the destination printing apparatuses interprets the whole of print data according to page number and prints selectively print data corresponding to the assigned page,
and wherein, when a total page count of the plurality of pages of printing requested by the first print job is not divisible by a number of the destination printing apparatuses, the page assignment module increases a page count of the assigned page including a page that is early in the page sequence, from among the groups of the page assigned to each of the destination printing apparatuses.

**9.** A printing apparatus connectable to a network, the printing apparatus comprising:

a receiving module that receives a first print job requesting a plurality of pages of printing;
a distribution destination specification module that specifies, from among the printing apparatus itself and other printing apparatus connected to the network, a plurality of destination printing apparatuses as distribution destinations for the plurality of pages of printing requested by the first print job;
a page assignment module that assigns a page to each of the plurality of destination printing apparatuses by dividing the plurality of pages of printing requested by the first print job into a same number of groups as a number of the plurality of destination printing apparatuses; and
a sending module that sends one of second print jobs respectively to each of the plurality of the destination printing apparatuses, wherein each of the second print jobs requests the assigned page of printing to each of the plurality of the destination printing apparatuses.

**10.** A printing method in a plurality of printing apparatuses connected to a network, the printing method comprising:

in a particular printing apparatus that is any of the plurality of printing apparatuses,
receiving a first print job requesting a plurality of pages of printing;
specifying, from among the plurality of printing apparatuses, a plurality of destination printing apparatuses as distribution destinations for the plurality of pages of printing requested by the first print job;
assigning a page to each of the plurality of destination printing apparatuses by dividing the plurality of pages of printing requested by the first print job into a same number of groups as a number of the plurality of destination printing apparatuses; and
sending one of second print jobs respectively to each of the plurality of the destination printing apparatuses, wherein each of the second print jobs requests the assigned a page of printing to each of the plurality of the destination printing apparatuses,
in each of the plurality of the destination printing apparatuses,
receiving one of the second jobs,
executing the assigned page of printing based on the received second job.

**11.** A computer program product for control at least one of a plurality of printing apparatuses connected to a network, the computer program product comprising:

a computer readable medium; and

a computer program stored on the computer readable medium, the computer program comprising:

a first program code for receiving a first print job requesting a plurality of pages of printing;

a second program code for specifying, from among the plurality of printing apparatuses, a plurality of destination printing apparatuses as distribution destinations for the plurality of pages of printing requested by the first print job;

a third program code for assigning a page to each of the plurality of destination printing apparatuses by dividing the plurality of pages of printing requested by the first print job into a same number of groups as a number of the plurality of destination printing apparatuses; and

a fourth program code for sending one of second print jobs respectively to each of the plurality of the destination printing apparatuses, wherein each of the second print jobs requests the assigned page of printing to each of the plurality of the destination printing apparatuses.

12. A printing controller connected to a plurality of printing apparatuses, each of the plurality of printing apparatuses having a printing mode that prints at least two pages on a single print medium, the printing controller comprising:

a receiving module that receives a first print job requesting a plurality of pages of printing using the printing mode;

a distribution destination specification module that specifies, from among the plurality of printing apparatuses, a plurality of destination printing apparatuses as distribution destinations for the plurality of pages of printing requested by the first print job;

a page assignment module that assigns a page to each of the plurality of destination printing apparatuses by dividing the plurality of pages of printing requested by the first print job into a same number of page-groups as a number of the plurality of destination printing apparatuses, wherein the page assignment module assigns certain pages to the same destination printing apparatus, wherein the certain pages are printed on one print medium if the first print job is printed using a single printing apparatus; and

a sending module that sends one of second print jobs respectively to each of the plurality of the destination printing apparatuses, wherein each of the second print jobs requests the assigned page of printing to each of the plurality of the destination printing apparatuses.

13. A printing controller according to Claim 12,

wherein the page assignment module assigns a print medium to each of the plurality of destination printing apparatuses by dividing a plurality of print media into a same number of medium-groups as the number of the destination printing apparatuses,

wherein the plurality of print media are media to be outputted as printing results if the first print job is printed, and wherein the page assignment module determines, as the page assigned to each of the plurality of destination printing apparatuses, page to be printed on the print medium assigned to each of the plurality of destination printing apparatuses.

14. A printing controller according to Claim 13, wherein

the page assignment module assigns approximately same number of the print medium to the plurality of destination printing apparatuses.

15. A printing controller according to any of Claims 12 through 14,

wherein the first print job includes data for specifying a page count to be printed on a initial print medium whereon a initial page of the plurality of pages of printing requested by the first print job is printed,

and wherein the page assignment module assigns the page using the data for specifying the page count to be printed on the initial print medium.

16. A printing controller according to Claim 15,

wherein the printing mode includes a duplex-printing mode that prints in page sequence both on a first face and a second face of the print medium,

and wherein the data for specifying the page count to be printed on the initial print medium is initial page print face specifying data that specifies whether the initial page is to be printed on the first face or the second face of the initial print medium.

17. A printing apparatus according to Claim 16,

wherein the duplex-printing mode includes a mode that prints an earlier page on the first face, and a later page on the second face, of the print medium

and wherein, when the initial page is printed on the first face, the ending page of the assigned page without a last page of the plurality of pages of printing requested by the first print job is an even page.

18. A printing apparatus according to Claim 16, wherein the duplex-printing mode includes a mode that prints an earlier page on the first face, and a later page on the second face, of the print medium, and wherein, when the initial page is printed on the second face, the ending page of the assigned page without a last page of the plurality of pages of printing requested by the first print job is an odd page.

19. A printing controller according to any of Claims 12 through 18, wherein the first print job includes print data corresponding to the plurality of pages of printing to be requested, and wherein each of the second print jobs includes page specifying data for specifying the assigned page, along with including whole of the print data.

20. A printing controller according to Claim 19, wherein:

each of the second print jobs includes the first print job to which the page specifying data is added.

21. A printing controller according to Claim 19 or Claim 20, wherein the assigned page is continuous, and wherein the page specifying data includes data for specifying starting page and ending page of the assigned page.

22. A printing controller according to any of Claims 12 through 21, the printing controller being incorporated in at least one of the plurality of printing apparatuses.

23. A printing apparatus incorporating a printing controller according to any of Claims 12 through 21.

24. A printing method of distributing a print job to a plurality of printing apparatuses, each of the plurality of printing apparatuses having a printing mode that prints at least two pages on a single print medium, the printing method comprising:

receiving a first print job requesting a plurality of pages of printing using the printing mode; specifying, from among the plurality of printing apparatuses, a plurality of destination printing apparatuses as distribution destinations for the plurality of pages of printing requested by the first print job; assigning a page to each of the plurality of destination printing apparatuses by dividing the plurality of pages of printing requested by the first print job into a same number of page-groups as a number of the plurality of destination printing apparatuses, wherein the page assignment module assigns certain pages to the same destination printing apparatus, wherein the certain pages are printed on one print medium if the first print job is printed using a single printing apparatus; and sending one of second print jobs respectively to each of the plurality of the destination printing apparatuses, wherein each of the second print jobs requests the assigned page of printing to each of the plurality of the destination printing apparatuses.

25. A computer program product for distributing a print job to a plurality of printing apparatuses, each of the plurality of printing apparatuses having a printing mode that prints at least two pages on a single print medium, the computer program product comprising:

a computer readable medium; and a computer program stored on the computer readable medium, the computer program comprising:

a first program code for receiving a first print job requesting a plurality of pages of printing using the printing mode; a second program code for specifying, from among the plurality of printing apparatuses, a plurality of destination printing apparatuses as distribution destinations for the plurality of pages of printing requested by the first print job; a third program code for assigning a page to each of the plurality of destination printing apparatuses by dividing the plurality of pages of printing requested by the first print job into a same number of page-groups as a number of the plurality of destination printing apparatuses, wherein the page assignment module assigns certain pages to the same destination printing apparatus, wherein the certain pages are printed on one print medium if the first print job is printed using a single printing apparatus; and

a fourth program code for sending one of second print jobs respectively to each of the plurality of the destination printing apparatuses, wherein each of the second print jobs requests the assigned page of printing to each of the plurality of the destination printing apparatuses.

# Fig.1

IP ADDRESS = IPc

CL

100

PRT1    IP ADDRESS = IP1

200

PRT2    IP ADDRESS = IP2

200

PRT3    IP ADDRESS = IP3

PRT4    IP ADDRESS = IP4

200

# Fig.2

## Fig.3A

400                                                                  450

| ... | SENDER IP ADDRESS | DESTINATION IP ADDRESS | ... | SENDER PORT NUMBER | DESTINATION PORT NUMBER | ... | |
|-----|-------------------|------------------------|-----|--------------------|-------------------------|-----|--|

SA          DA                    SP          DP

## Fig.3B

JB

| JOB CONTROL LANGUAGE AREA | PAGE DESCRIPTION LANGUAGE AREA |
|---------------------------|--------------------------------|

501                                    502

501

```
■@EJL<LF>
@EJL SJ ID="2"<LF>
@EJL JI ID="2" DATE="2005/6/27 9:48:59"
PRINTER="EPSON LP-9000C"<LF>
@EJL JI USER="0097017" MACHINE="¥¥HEPAT013"
OS="Windows 2000" DOCUMENT="Microsoft Word - DOCUMENT 1"
DRIVER="EPSON LP-9000C" PRIORITY="1" <LF>
@EJL JI PAGES="10"<LF>
@EJL JC STARTPAGE=5 ENDPAGE=8<LF>
@EJL SE LA=ESC/PAGE<LF>
@EJL SET RS=QK PU=AU PS=A4 OU=FD DX=OFF ZO=OFF EC=ON
SZ=OFF RI=ON SN=OFF
GAMMAMODE=NORMAL SL=YES CO=1 QT=1 PK=NM TO=0 LO=0<LF>
@EJL EN LA=ESC/PAGE-COLOR<LF>
```

TP
PE

QT          DX

# Fig.4

Fig.5

START

S102

NO ← FIRST PRINT JOB HAS ARRIVED ?

YES ↓ S104

RECEIVE TOP SECTION OF PRINT JOB INCLUDING JOB CONTROL LANGUAGE AREA

S106

GET TOTAL PAGE COUNT

S108

DESTINATION PRINTER SPECIFICATION PROCESS

S110

DETERMINE PAGE ASSIGNMENT FOR EACH DESTINATION PRINTER

S112

SEND TO EACH DESTINATION PRINTER TOP SECTION OF PRINT JOB WITH ADDED PAGE SPECIFICATION INFORMATION PE

S114

RECEIVE PRINT JOB AFTER TOP SECTION AND SEND TO EACH DESTINATION PRINTER

S116

NO ← RECEPTION OF FIRST PRINT JOB COMPLETE ?

YES ↓

END

25

## Fig.6

START

GET IP ADDRESSES OF
CONNECTED DEVICES S202

GET INFORMATION REGARDING
CONNECTED DEVICES S204

SPECIFY PRINTERS FULFILLING
SPECIFIC CONDITIONS AS
DESTINATION PRINTERS S206

AT LEAST
ONE PRINTER
SPECIFIED
? S208

WAIT SPECIFIC
TIME PERIOD S210

NO

YES

END

# Fig.7

NUMBER OF DESTINATION PRINTERS M = 4

m: DESTINATION PRINTER NUMBER

Q: TOTAL PAGE COUNT

| Q \ m | 1 | 2 | 3 | 4 |
|---|---|---|---|---|
| 10 | 3 | 3 | 2 | 2 |
| 11 | 3 | 3 | 3 | 2 |
| 12 | 3 | 3 | 3 | 3 |
| 13 | 4 | 3 | 3 | 3 |
| 14 | 4 | 4 | 3 | 3 |
| 15 | 4 | 4 | 4 | 3 |
| 16 | 4 | 4 | 4 | 4 |
| 17 | 5 | 4 | 4 | 4 |
| 18 | 5 | 5 | 4 | 4 |
| 19 | 5 | 5 | 5 | 4 |
| 20 | 5 | 5 | 5 | 5 |

Fig.8

```
         ┌─────────────┐
         │    START    │
         └─────────────┘
                │
                ▼
              ╱   ╲  ┌S302
            ╱       ╲
          ╱  NORMAL   ╲      NO
         ⟨  PRINT JOB   ⟩ ──────→
          ╲ HAS ARRIVED╱
            ╲    ?    ╱
              ╲   ╱
                │ YES
                ▼
      ┌─────────────────────────────┐ ┌S304
      │ RECEIVE SEQUENTIALLY PRINT JOB│
      │ THAT IS SENT, AND STORE IN BUFFER│
      └─────────────────────────────┘
                │
                ▼
              ╱   ╲  ┌S306
      NO    ╱ RECEPTION╲
   ←───────⟨  OF PRINT  ⟩
            ╲ JOB COMPLETE╱
              ╲    ?    ╱
                │ YES
                ▼
         ┌─────────────┐
         │     END     │
         └─────────────┘
```

# Fig.9

START

S402
INCLUDES PAGE SPECIFICATION INFORMATION PE ?

S404
GET PAGE SPECIFICATION INFORMATION PE (STARTING PAGE S AND ENDING PAGE E)

S406
PAGE NUMBER n = 1

S410
INTERPRET PRINT JOB TO GENERATE IMAGE DATA FOR PAGE n

S412
PAGE SPECIFICATION INFORMATION PE ACQUIRED ?

NO

YES

S414
$S \leqq n \leqq E$

NO

YES

S416
GENERATE PRINT REQUEST FOR PAGE n

S418
IS PAGE n LAST PAGE ?

YES

NO

S420
n ← n+1

END

## Fig.10

501

```
■@EJL<LF>
@EJL SJ ID="2"<LF>
@EJL JI ID="2" DATE="2005/6/27 9:48:59"
PRINTER="EPSON LP-9000C"<LF>
@EJL JI USER="0097017" MACHINE="¥¥HEPAT013"
OS="Windows 2000" DOCUMENT="Microsoft Word - DOCUMENT 1"
DRIVER="EPSON LP-9000C" PRIORITY="1" <LF>
@EJL JI PAGES="10"<LF>
@EJL JC STARTPAGE=5 ENDPAGE=8<LF>
@EJL SE LA=ESC/PAGE<LF>
@EJL SET RS=QK PU=AU PS=A4 OU=FD DX=ON FC=BK ZO=OFF
EC=ON SZ=OFF RI=ON SN=OFF
GAMMAMODE=NORMAL SL=YES CO=1 QT=1 PK=NM TO=0 LO=0<LF>
@EJL EN LA=ESC/PAGE-COLOR<LF>
```

TP
PE
QT
DX

## Fig.11A

FC=FR

F1

1
2

3
4

5
6

...

F2

## Fig.11B

FC=BK

F1

BLANK
1

2
3

4
5

...

F2

# Fig.12

```
  ┌─────────────────────────────────┐
  │    PAGE ASSIGNMENT PROCESS       │
  └─────────────────────────────────┘
                  │
                  ▼           ⌐ S1102
  ┌─────────────────────────────────┐
  │    GET INITIAL PAGE PRINT FACE   │
  │    SPECIFICATION INFORMATION     │
  └─────────────────────────────────┘
                  │
                  ▼           ⌐ S1104
  ┌─────────────────────────────────┐
  │    CALCULATE TOTAL NUMBER OF     │
  │    SHEETS OF PRINTER PAPER Qv    │
  └─────────────────────────────────┘
                  │
                  ▼           ⌐ S1106
  ┌─────────────────────────────────┐
  │      ASSIGN PRINTER PAPER        │
  │    SHEETS TO BE OUTPUTTED TO     │
  │  INDIVIDUAL DESTINATION PRINTERS │
  └─────────────────────────────────┘
                  │
                  ▼           ⌐ S1108
  ┌─────────────────────────────────┐
  │   DETERMINE, AS ASSIGNED PAGE,   │
  │     PAGES TO BE PRINTED TO       │
  │  ASSIGNED PRINTER PAPER SHEETS   │
  └─────────────────────────────────┘
                  │
                  ▼
  ┌─────────────────────────────────┐
  │              END                 │
  └─────────────────────────────────┘
```

# Fig.13A

BLANK　F1
1　2　4　6　8　10
3　5　7　9
F2

# Fig.13B

F1
1　2　3　4　5　6
F2

# Fig.13C

| FIRST PRINTER | SECOND PRINTER | THIRD PRINTER |
|---|---|---|

F1
1　2　　3　4　　5　6
F2

$Sv(1)=1, Ev(1)=2$　　$Sv(2)=3, Ev(2)=4$　　$Sv(3)=5, Ev(3)=6$

# Fig.13D

| FIRST PRINTER | SECOND PRINTER | THIRD PRINTER |
|---|---|---|

F1
BLANK　2　　4　6　　8　10
1　3　　5　7　　9
F2

$S(1)=1, E(1)=3$　　$S(2)=4, E(2)=7$　　$S(3)=8, E(3)=10$

## Fig.14A

F1
BLANK

FIRST PRINTER          SECOND PRINTER          THIRD PRINTER

| 2 | 4 | 6 | 8 | 10 |
| 1 | 3 | 5 | 7 | 9 |

F2

## Fig.14B

F1
FIRST PRINTER          SECOND PRINTER          THIRD PRINTER

| 1 | 3 | 5 | 7 | 9 |
| 2 | 4 | 6 | 8 | 10 |

F2

## Fig.14C

F1
BLANK

FIRST PRINTER          SECOND PRINTER          THIRD PRINTER

| 2 | 4 | 5 | 7 | 8 |
| 1 | 3 | BLANK | 6 | BLANK | 9 | ...

F2

## Fig.14D

F1
FIRST PRINTER          SECOND PRINTER          THIRD PRINTER

| 1 | 3 | 5 | 7 | 8 | 10 |
| 2 | 4 | 6 | BLANK | 9 |

F2

# Fig.15

| FIRST JOB CONTROL LANGUAGE AREA | PAGE DESCRIPTION LANGUAGE AREA | SECOND JOB CONTROL LANGUAGE AREA |
|---|---|---|
| 501a | 502 | 501b |

501a

```
■@EJL<LF>
@EJL SJ ID="2"<LF>
@EJL JI ID="2" DATE="2005/6/27 9:48:59"
PRINTER="EPSON LP-9000C"<LF>
@EJL JI USER="0097017" MACHINE="¥¥HEPATO13"
OS="Windows 2000" DOCUMENT="Microsoft Word
 - DOCUMENT 1" DRIVER="EPSON LP-9000C"
PRIORITY="1" <LF>
@EJL JC STARTPAGE=5 ENDPAGE=8<LF>
@EJL SE LA=ESC/PAGE<LF>
@EJL SET RS=QK PU=AU PS=A4 OU=FD DX=OFF
ZO=OFF EC=ON SZ=OFF RI=ON SN=OFF
GAMMAMODE=NORMAL SL=YES CO=1 QT=1
PK=NM TO=0 LO=0<LF>
@EJL EN LA=ESC/PAGE-COLOR<LF>
```

501b                    TP

```
■@EJL<LF>
@EJL JI PAGES="10"<LF>
■@EJL<LF>
@EJL EJ<LF>
■@EJL<LF><FF>
```

# Fig.16

```
              ┌─────────────┐
              │    START    │
              └─────────────┘
                     │
       ┌─────────────┤
       │             ▼                              ┌S102
       │      ╱───────────────────────╲
  NO   │     ╱   PRINT JOB HAS          ╲
◄──────┤    ╱  ARRIVED AT PORT NUMBER    ╲
       │    ╲        "59100"             ╱
       │     ╲          ?               ╱
       │      ╲───────────────────────╱
       │           YES  │                  ┌S504
       │                ▼
       │    ┌──────────────────────────────┐
       │    │  RECEIVE ENTIRETY OF PRINT JOB │
       │    └──────────────────────────────┘
       │                │                   ┌S106
       │                ▼
       │    ┌──────────────────────────────┐
       │    │      GET TOTAL PAGE COUNT      │
       │    └──────────────────────────────┘
       │                │                   ┌S108
       │                ▼
       │    ┌┃────────────────────────────┃┐
       │    │┃   DESTINATION PRINTER       ┃│
       │    │┃   SPECIFICATION PROCESS     ┃│
       │    └┃────────────────────────────┃┘
       │                │                   ┌S110
       │                ▼
       │    ┌──────────────────────────────┐
       │    │ DETERMINE PAGE ASSIGNMENT FOR  │
       │    │   EACH DESTINATION PRINTER     │
       │    └──────────────────────────────┘
       │                │                   ┌S512
       │                ▼
       │    ┌──────────────────────────────┐
       │    │   SEND ENTIRETY OF PRINT JOB,  │
       │    │ TO WHICH PAGE SPECIFICATION    │
       │    │ INFORMATION PE HAS BEEN ADDED, │
       │    │  TO EACH DESTINATION PRINTER   │
       │    └──────────────────────────────┘
                        │
                        ▼
              ┌─────────────┐
              │     END     │
              └─────────────┘
```

# Fig.17A

F1

| BLANK | 3 | 4 | 7 | 8 | 11 | 12 | 15 | 16 | 19 | 20 |
| 1 | 2 | 5 | 6 | 9 | 10 | 13 | 14 | 17 | 18 | |

F2

# Fig.17B

F1

| 1 | 2 | 3 | 4 | 5 | 6 |

F2

# Fig.17C

FIRST PRINTER          SECOND PRINTER          THIRD PRINTER

F1

| 1 | 2 |   | 3 | 4 |   | 5 | 6 |

Sv(1)=1, Ev(1)=2          Sv(2)=3, Ev(2)=4          Sv(3)=5, Ev(3)=6

F2

# Fig.17D

FIRST PRINTER          SECOND PRINTER          THIRD PRINTER

F1

| BLANK | 3 | 4 | 7 | 8 | 11 | 12 | 15 | 16 | 19 | 20 |
| 1 | 2 | 5 | 6 | 9 | 10 | 13 | 14 | 17 | 18 | |

F2   S(1)=1, E(1)=6          S(2)=7, E(2)=14          S(3)=15, E(3)=20